(19) Europäisches Patentamt
European Patent Office
Office européen des brevets

(11) **EP 3 744 863 B1**

## (12) EUROPÄISCHE PATENTSCHRIFT

(45) Veröffentlichungstag und Bekanntmachung des Hinweises auf die Patenterteilung:
**19.02.2025 Patentblatt 2025/08**

(21) Anmeldenummer: **20174644.3**

(22) Anmeldetag: **14.05.2020**

(51) Internationale Patentklassifikation (IPC):
*G05B 19/042* (2006.01)    *C22B 7/00* (2006.01)
*C22B 1/00* (2006.01)    *C22B 21/00* (2006.01)
*B07C 5/16* (2006.01)    *B07C 5/38* (2006.01)

(52) Gemeinsame Patentklassifikation (CPC):
**C22B 1/005; B07C 5/38; C22B 7/00;
C22B 21/0069;** G05B 19/042; Y02P 10/20

---

(54) **VERFAHREN FÜR DAS SAMMELN VON METALLSCHROTTEN IN SAMMELBEHÄLTERN**

METHOD FOR COLLECTING METAL SCRAP IN COLLECTION CONTAINERS

PROCÉDÉ DESTINÉ À LA COLLECTE DE DÉCHETS MÉTALLIQUES DANS DES RÉSERVOIRS DE COLLECTE

---

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2019 DE 102019114515**

(43) Veröffentlichungstag der Anmeldung:
**02.12.2020 Patentblatt 2020/49**

(73) Patentinhaber: **Speira GmbH
41515 Grevenbroich (DE)**

(72) Erfinder:
 • **GILLNER, Dr.-Ing. Ronald
  53913 Swisttal (DE)**
 • **ZESIN, Harald
  50181 Bedburg (DE)**
 • **ROMBACH, Dr. Georg
  53229 Bonn (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
**WO-A1-2010/128981    DE-A1- 102012 024 816**

• **KEVORKIJAN VARU: "Modeling of Alternative Compositions of Recycled Wrought Aluminum Alloys", JOM: JOURNAL OF METALS, SPRINGER NEW YORK LLC, UNITED STATES, vol. 65, no. 8, 11 July 2013 (2013-07-11), pages 973 - 981, XP035350685, ISSN: 1047-4838, [retrieved on 20130711], DOI: 10.1007/ S11837-013-0669-1**
• **WA ALLOYS: "International Alloy Designations and Chemical Composition Limits for Wrought Aluminum and Wrought Aluminum Alloys", THE ALUMINUM ASSOCIATION - TEAL SHEET, 1 August 2018 (2018-08-01), XP055842354, Retrieved from the Internet <URL:https://www. aluminum.org/sites/default/files/Teal%20Sheet. pdf> [retrieved on 20210920]**

---

**Beschreibung**

Die vorliegende Erfindung betrifft ein Verfahren für das Sammeln von Metallschrotten, insbesondere Aluminiumschrotten, in Sammelbehältern, bei dem an einer oder mehreren Produktionsschrott-Anfallstellen einer Produktionsanlage Metallschrott eines ersten in der Produktionsanlage verarbeiteten Materials mit einer vorgegebenen ersten Zusammensetzung und Metallschrott eines zweiten in der Produktionsanlage verarbeiteten Materials mit einer vorgegebenen zweiten Zusammensetzung anfällt und bei dem eine erste Menge des Metallschrotts des ersten Materials und eine zweite Menge des Metallschrotts des zweiten Materials einem Sammelbehälter zugeführt und in diesem gesammelt werden.

Die Erfindung betrifft weiterhin ein System für das Sammeln von Metallschrotten in Sammelbehältern mit einem Sammelbehältersystem, das dazu eingerichtet ist, nacheinander verschiedene Sammelbehälter an einer Produktionsschrott-Anfallstelle einer Produktionsanlage derart zur Verfügung zu stellen, dass der an der Produktionsschrott-Anfallstelle anfallende Metallschrott in dem jeweiligen zur Verfügung gestellten Sammelbehälter gesammelt wird.

Bei der Herstellung und Verarbeitung von Metallen, insbesondere Aluminium, fallen an unterschiedlichen Anfallstellen Produktionsschrotte (sog. "production scrap") an, welche in Sammelbehältern gesammelt werden. Es ist wünschenswert, diese Produktionsschrotte in einer Kreislaufführung durch Einschmelzen wieder für das Herstellen des Produkts zu nutzen, bei dessen Produktion sie anfallen.

Da beispielsweise in Walzwerken typischerweise verschiedene Legierungen, insbesondere Aluminiumlegierungen verarbeitet werden, kommt es häufig dazu, dass Produktionsschrotte verschiedener Legierungen miteinander vermischt werden, sogenannte "Mischschrotte", indem Produktionsschrotte verschiedener Legierungen in ein und demselben Sammelbehälter gesammelt werden.

Nach dem heutigen Stand der Technik führt eine solche Vermischung von sortenreinem bzw. legierungsreinem Produktionsschrott mit bereits kleinen Mengen nicht zur Sorte bzw. Legierung gehörendem Produktionsschrott in einem Sammelbehälter zu einer Aussortierung des gesamten im Sammelbehälter gemischten Produktionsschrotts, so dass eine bevorzugt durchgeführte Kreislaufführung für den Inhalt dieses Sammelbehälters nicht mehr möglich ist.

Auch die übliche Zusammenfassung mehrerer Legierungstypen zu Schrottklassen, welche gegenüber den häufig engen Zusammensetzungsvorgaben einzelner Legierungstypen typischerweise breitere Zusammensetzungsvorgaben in Bezug auf Grenzwerte für einzelne Legierungselemente haben, ist nur bedingt hilfreich. Denn wenn in einer Produktionsanlage Materialien unterschiedlicher Schrottklassen verarbeitet werden und es dadurch zu einer Mischung von Produktionsschrott unterschiedlicher Schrottklassen in einem Sammelbehälter kommt, ist derzeit ebenfalls eine Aussortierung des gesamten im Sammelbehälter gemischten Produktionsschrotts erforderlich.

Der Grund für die Aussortierung der Mischschrotte von der Kreislaufführung liegt darin, dass die Grenzwerte für Legierungselemente bei der Produktion eingehalten werden müssen, da ansonsten gesamte Schmelzofenchargen von bis zu 100 t außerhalb der Spezifikationen liegen können und im schlechtesten Fall verschrottet werden müssen. Die Einhaltung der Spezifikationen ist jedoch nur möglich, wenn die Zusammensetzung der dem Schmelzofen hinzugefügten Produktionsschrotte bekannt ist, was im heutigen Stand der Technik durch eine strikte Verwendung sortenreiner bzw. legierungsreiner Produktionsschrotte oder Schrottklassen erfolgt.

Eine Möglichkeit, aufgrund von Vermischung unterschiedlicher Sorten bzw. Legierungen oder Schrottklassen aussortierte Produktionsschrotte wieder in die Kreislaufführung zurückzuführen, wurde in der WO 2017 / 108908 A9 vorgeschlagen. Dieses Verfahren erfordert jedoch, dass die Mischschrotte einer recht aufwändigen Analyse unterzogen werden.

Weiter offenbart die DE 10 2012 024 816 A1 ein Verfahren zur Einzelkornsortierung von Schrotten, um eine gewünschte Zielfraktion zusammenzustellen. Eine solche Einzelkornsortierung erfordert einen aufwändigen Analyse- und Sortiervorgang. Ein weiteres Verfahren, bei dem eine Einzelkornsortierung von Post-Consumer-Schrotten erfolgt, ist aus dem Artikel "Modeling of Alternative Compositions of Recycled Wrought Aluminum Alloys" von V. M. Kevorkijan, JOM 65 (2013), S. 973-981, bekannt.

Vor diesem Hintergrund liegt der vorliegenden Erfindung die Aufgabe zu Grunde, ein Verfahren und ein System für das Sammeln von Metallschrotten, insbesondere Aluminiumschrotten, in Sammelbehältern zur Verfügung zu stellen, mit denen die Menge der aussortierten, nicht für eine Kreislaufführung geeigneten Produktionsschrotte reduziert werden kann und somit eine effizientere Kreislaufführung der Schrotte erreicht wird.

Diese Aufgabe wird gelöst durch ein Verfahren für das Sammeln von Metallschrotten, insbesondere Aluminiumschrotten, in Sammelbehältern, gemäß Anspruch 1. Bei dem Verfahren fällt an einer oder mehreren Produktionsschrott-Anfallstellen einer Produktionsanlage Metallschrott eines ersten in der Produktionsanlage verarbeiteten Materials mit einer vorgegebenen ersten Zusammensetzung und Metallschrott eines zweiten in der Produktionsanlage verarbeiteten Materials mit einer vorgegebenen zweiten Zusammensetzung an und eine erste Menge des Metallschrotts des ersten Materials und eine zweite Menge des Metallschrotts des zweiten Materials werden einem Sammelbehälter zugeführt und in diesem gesammelt. Bei dem Verfahren werden weiter eine erste Mengeninformation über ein Maß der ersten Menge und eine zweite Mengeninformation über ein Maß der zweiten Menge bestimmt und eine Sammelbehälter-Zusammensetzungsinformation über die Zusammensetzung des gesamten in dem Sammelbehälter gesammelten Metallschrotts abhängig von einer vorgegebenen ersten Zusammensetzungsinformation über die erste Zusammensetzung, einer vorgegebenen zweiten Zusammensetzungsinformation über die zweite Zusammensetzung und von der ersten und der zweiten Mengeninformation wird berechnet.

Bei der Produktionsanlage handelt es sich insbesondere um eine metallverarbeitende Anlage, bei deren Betrieb Metallschrott anfällt. Insbesondere kann es sich bei der Produktionsanlage um eine Anlage zur Verarbeitung von Aluminiumprodukten, insbesondere Aluminiumbändern, handeln.

Bei der Produktionsschrott-Anfallstelle handelt es sich insbesondere um eine Stelle an der Produktionsanlage, an der beim Betrieb der Produktionsanlage regelmäßig oder kontinuierlich Metallschrott anfällt. Bei dem Metallschrott kann es sich beispielsweise um Zuschnitt- oder Stanzabfälle handeln, die bei einem Zuschneideschritt oder einem Stanzschritt in der Produktionsanlage anfallen.

Handelt es sich bei der Produktionsanlage zum Beispiel um eine Produktionslinie zur Herstellung und/oder Verarbeitung von Aluminiumbändern, insbesondere in einer Walzanlage, so können Metallschrotte insbesondere an Besäumscheren zur Randbesäumung der Aluminiumbänder oder an Scheren zur Ablängung der Aluminiumbänder anfallen. Weiterhin kann es bei der Verarbeitung von Aluminiumbändern erforderlich sein, zwei aufeinanderfolgende Bänder für einen Verarbeitungsschritt temporär miteinander zu verbinden, wobei der Verbindungsbereich anschließend entfernt wird und als Metallschrott anfällt.

Weiterhin kann der Metallschrott auch in Form von Ausschuss anfallen, zum Beispiel an einer Qualitätsprüfstation einer Produktionsanlage, an der fehlerhafte Metallteile als Metallschrott ausgesondert werden.

Der Metallschrott kann in einzelnen Stücken anfallen, zum Beispiel als Stanzabfälle von Aluminiumblechen oder Ablängschrott von Aluminiumbändern. Weiterhin kann der Metallschrott auch kontinuierlich anfallen, insbesondere bandartig, zum Beispiel bei Besäumschrott von Aluminiumbändern.

An der Produktionsschrott-Anfallstelle fällt Metallschrott eines ersten und eines zweiten Materials an. In vielen Produktionsanlagen werden unterschiedliche Materialien verarbeitet, insbesondere unterschiedliche Legierungen eines Materials, beispielsweise Aluminimumlegierungen. Die unterschiedlichen Materialien, insbesondere unterschiedlichen Legierungen, können insbesondere nacheinander in der Produktionsanlage verarbeitet werden. Beispielsweise kann in der Produktionsanlage für zwei Stunden ein erstes Material verarbeitet werden und im Anschluss daran ein zweites Material. Bei einer Aluminiumbänder-herstellenden und/oder -verarbeitenden Produktionsanlage kann zum Beispiel zunächst ein erstes Aluminiumband aus einer ersten Aluminiumlegierung und anschließend ein zweites Aluminiumband aus einer zweiten Aluminiumlegierung verarbeitet werden.

Die in der Produktionsanlage verarbeiteten Materialien sind insbesondere hinsichtlich ihrer Zusammensetzung verschieden. Beispielsweise können in der Produktionsanlage Aluminiumbleche oder -bänder aus verschiedenen Aluminiumlegierungen oder sogar aus verschiedenen Aluminiumklassen verwendet werden, so dass an der Produktionsschrott-Anfallstelle Metallschrott aus verschiedenen Aluminiumlegierungen oder aus verschiedenen Aluminiumklassen anfallen kann.

Beispiele für Aluminiumlegierungen sind insbesondere die in DIN EN 573-3 genannten Aluminiumlegierungen, wie z.B. EN AW-1050A, EN AW 1060 usw., EN AW-5005, EN AW-5006 usw. EN AW-6003, EN AW-6005 usw. Unter Aluminiumklassen werden Zusammenfassungen mehrerer ähnlicher Aluminiumlegierungen verstanden. Als Aluminiumklassen kommen zunächst die Aluminiumgruppen 1xxx, 2xxx, 3xxx usw. in Frage. Es kommen auch engere Aluminiumklassen in Frage, wie zum Beispiel 10xx, 11xx, 12xx usw., 20xx, 21xx, 22xx usw. Zum Zwecke der Kreislaufführung definierte Aluminiumklassen werden auch als "Schrottklassen" bezeichnet, da der Metallschrott getrennt nach diesen "Schrottklassen" gesammelt und eingesetzt wird.

Die erste Zusammensetzung des ersten Materials und die zweite Zusammensetzung des zweiten Materials sind vorgegeben. Bei der Verarbeitung von Material wie zum Beispiel Aluminiumblechen oder Aluminiumbändern in einer Produktionsanlage ist die Zusammensetzung der Materialien typischerweise vorbekannt, da für die eingesetzten Materialien im Allgemeinen Spezifikationen und/oder Zusammensetzungszertifikate vorliegen, in denen eine Zusammensetzungsinformation über die Zusammensetzung des betreffenden Materials aufgeführt ist. Die Zusammensetzungsinformation über die Zusammensetzung eines Materials kann zum Beispiel Gehaltsbereiche für ein oder mehrere Legierungselemente umfassen, in denen der tatsächliche Gehalt beim jeweiligen Material liegt. Derartige Gehaltsbereiche können beispielsweise durch eine Materialspezifikation vorgegeben sein. Zusätzlich oder alternativ kann die Zusammensetzungsinformation auch Gehaltswerte für ein oder mehrere Legierungselemente umfassen, die dem tatsächlichen Gehalt des jeweiligen Materials entsprechend. Derartige Gehaltswerte können beispielsweise durch ein Zertifikat des Materials vorgegeben sein, in dem dessen Zusammensetzung durch eine vorab, zum Beispiel an der Schmelze, durchgeführte Legierungsanalyse bestimmt wurde.

Handelt es sich bei dem Material um eine Aluminiumlegierung, so kann die Zusammensetzungsinformation insbesondere Angaben zum Gehalt eines oder mehrerer der folgenden Nebenlegierungselemente enthalten: Fe, Si, Mg, Mn, Cu, Cr, Ti, Zn, Ni, V, B. Eine Angabe zum Gehalt der Hauptlegierungskomponente Al kann, muss aber nicht enthalten sein.

Die erste und zweite Zusammensetzung können insbesondere in einem Produktionsplan der Produktionsanlage vorgegeben sein. In einem solchen Produktionsplan sind Informationen über die Reihenfolge der in der Produktionsanlage verarbeiteten Materialien enthalten, wie zum Beispiel eine Reihenfolge von nacheinander in der Produktionsanlage verarbeiteten Aluminiumbändern.

Eine erste Menge des Metallschrotts des ersten Materials und eine zweite Menge des Metallschrotts des zweiten Materials werden einem Sammelbehälter zugeführt. Auf diese Weise gelangt Metallschrott aus verschiedenen Materialen in denselben Sammelbehälter, insbesondere Metallschrott aus verschiedenen Aluminiumlegierungen oder sogar Metallschrott aus verschiedenen Aluminiumklassen.

Die erste Menge und die zweite Menge können dem Sammelbehälter insbesondere nacheinander zugeführt werden. Dies ist insbesondere dann der Fall, wenn das erste Material und das zweite Material nacheinander in der Produktionsanlage verarbeitet werden. Werden bei einer Aluminiumband-herstellenden und/oder -verarbeitenden Produktionsanlage nacheinander ein Aluminiumband aus einem ersten Material und einem zweiten Material verarbeitet, so gelangt zunächst eine Menge Metallschrott des ersten Materials und dann eine Menge Metallschrott des zweiten Materials in den Sammelbehälter. Dies kann insbesondere bei einem Materialwechsel in der Produktionsanlage auftreten.

Zwar wäre es denkbar, einen exakt mit dem Materialwechsel synchronisierten Sammelbehälter-Wechsel durchzuführen, um eine Vermischung von Metallschrott aus verschiedenen Materilien zu vermeiden. Diese exakte Synchronisation ist jedoch technisch nicht ganz einfach umzusetzen und hat zudem wirtschaftliche Nachteile, da dies zum Beispiel dazu führen kann, dass ein erst wenig gefüllter Sammelbehälter gegen einen anderen getauscht werden muss, um Materialreinheit zu gewährleisten, was zu Engpässen bei der Sammelbehälter-Bereitstellung oder sogar zu Standzeiten der Produktionsanlage führen kann.

Es ist auch denkbar, dass die erste Menge und die zweite Menge dem Sammelbehälter im Wesentlichen zeitgleich zugeführt werden. Dies kann insbesondere dann der Fall sein, wenn in einer Produktionsanlage, beispielsweise einer Produktionsanlage mit zwei parallelen Verarbeitungslinien, zwei Materialien gleichzeitig verarbeitet werden und der jeweils anfallende Metallschrott einem Sammelbehälter zugeführt wird.

Die Sammelbehälter können in Form von Containern, Kübeln oder einer sonstigen Form ausgestaltet sein und vorzugsweise ein Fassungsvermögen im Bereich von 500 bis 25000 kg, vorzugsweise von 500 bis 5000 kg, insbesondere von 1000 bis 4000 kg aufweisen.

Es werden eine erste Mengeninformationen über ein Maß der ersten Menge und eine zweite Mengeninformation über ein Maß der zweiten Menge bestimmt. Bei dem Maß kann es sich insbesondere um das Gewicht handeln. Entsprechend wird vorzugsweise als erste Mengeninformation das Gewicht der ersten Menge und als zweite Mengeninformation das Gewicht der zweiten Menge bestimmt. Durch die erste und die zweite Mengeninformation ist bekannt, wieviel Metallschrott des ersten Materials und wieviel Metallschrott des zweiten Materials dem Sammelbehälter zugeführt wurden.

Abhängig von einer vorgegebenen ersten Zusammensetzungsinformation über die erste Zusammensetzung, von einer vorgegebenen zweiten Zusammensetzungsinformation über die zweite Zusammensetzung und von der ersten und der zweiten Mengeninformation wird eine Sammelbehälter-Zusammensetzungsinformation über die Zusammensetzung des gesamten in dem Sammelbehälter gesammelten Metallschrotts berechnet.

Auf diese Weise wird erreicht, dass die Zusammensetzung des in dem Sammelbehälter gesammelten Metallschrotts auch dann noch bekannt ist, wenn dem Sammelbehälter Metallschrott aus verschiedenen Materilien zugeführt wurde. Bisher war Zusammensetzung des Metallschrotts in einem solchen Misch-Sammelbehälter nicht genau bekannt, so dass der Inhalt eines solchen Sammelbehälters häufig nur pauschal als "Mischschrott" deklariert und aus der sortenreinen Kreislaufführung der Schrotte ausgesondert wurde. Die Deklaration als "Mischschrott" erfolgt zuweilen bereits dann, wenn einem Sammelbehälter mit Schrott aus einem ersten Material auch nur geringe Mengen Schrott aus einem zweiten Material, z.B. mehr als 0,15 Gew.-%, zugeführt werden.

Demgegenüber ist es durch die Berechnung der Sammelbehälter-Zusammensetzungsinformation nun möglich, den Sammelbehälter in der bevorzugten Kreislaufführung zu belassen, wenn er den geforderten Zusammensetzungsvorgaben weiterhin genügt. Dadurch kann die Anzahl der auszusondernden Sammelbehälter reduziert werden.

Das Verfahren macht sich insbesondere zunutze, dass beim Betrieb einer Produktionsanlage wie zuvor beschrieben typischerweise Zusammensetzungsinformationen über die Zusammensetzung der in der Produktionsanlage verarbeiteten Materialien zur Verfügung stehen, wie zum Beispiel durch vorgegebene Spezifikationen oder Analyseergebnisse von vorab durchgeführten Analysen, deren Ergebnisse zum Beispiel in einem Zertifikat des Materials angegeben sein können. Auf diese Weise ist eine gesonderte und aufwändige nachträgliche Analyse des in einem Sammelbehälter gesammelten Schrotts nicht erforderlich, wodurch das Verfahren signifikant vereinfacht wird und Kosten für die Analysen sowie für ggf. erforderliche Analyseanlagen eingespart werden. Entsprechend wird die Sammelbehälter-Zusammensetzungsinformation insbesondere ohne eine gesonderte Analyse des gesamten in dem Sammelbehälter gesammelten Metallschrotts berechnet.

Die Verwendung des Verfahrens ermöglicht damit insbesondere eine Rückführung der oben genannten "Mischschrotte" in den Kreislauf, da deren Zusammensetzung beim Schmelzprozess berücksichtigt werden kann und ein eventueller Unterschied zur gewünschten Schmelzezusammensetzung zum Beispiel durch anderen Schrott kompensiert werden kann.

Das Verfahren erlaubt zudem eine bessere Ausnutzung der Sammelbehälter-Kapazität, da es für eine sortenreine Trennung seltener erforderlich ist, den Sammelbehälter zu wechseln. Daher kann zum Beispiel die Anzahl der vorzuhaltenden Sammelbehälter reduziert werden, was ökonomischer sein kann.

Bei der Berechnung der Sammelbehälter-Zusammensetzungsinformation werden insbesondere die Gehalte ein oder mehrerer Legierungselemente des gesamten im Sammelbehälter gesammelten Metallschrotts berechnet. Zur Berechnung des Gehalts eines Legierungselements $x$ der Sammelbehälter-Zusammensetzungsinformation kann insbesondere folgende Formel (1) verwendet werden:

$$C_x = \frac{c_{x,1}m_1 + c_{x,2}m_2}{m_1 + m_2} = \frac{\sum_i c_{x,i}m_i}{\sum_i m_i}, \qquad (1)$$

wobei $c_{x,1}$ und $c_{x,2}$ der jeweilige Gehalt des Legierungselements $x$ in der ersten bzw. in der zweiten Menge sind, $m_1$ und $m_2$ die jeweiligen Mengeninformationen über ein Maß der ersten bzw. zweiten Menge, insbesondere die Gewichte der ersten bzw. zweiten Menge sind und wobei $C_x$ der Gehalt des Legierungselements $x$ in dem gesamten im Sammelbehälter gesammelten Schrott ist. $x$ kann zum Beispiel aus der folgenden Liste gewählt sein: Fe, Si, Mg, Mn, Cu, Cr, Ti, Zn, Ni, V, B.

Wenn die erste oder zweite Zusammensetzungsinformation anstelle eines Gehalts einer Legierungskomponente einen Gehaltsbereich umfasst, zum Beispiel aus einer vorgegebenen Materialspezifikation, so kann zur Berechnung des entsprechenden Gehalts für die Sammelbehälter-Zusammensetzungsinformation mit der obigen Formel (1) zum Beispiel der vorgegebene Maximalwert als Wert für $c_{x,1}$ bzw. $c_{x,2}$ verwendet werden, um den Gehalt im gesamten Schrott im Sammelbehälter nach oben abschätzen zu können.

Die oben genannte Aufgabe wird weiterhin bei einem System für das Sammeln von Metallschrotten in Sammelbehältern gemäß Anspruch 13 gelöst. Das System umfasst ein Sammelbehältersystem, das dazu eingerichtet ist, nacheinander verschiedene Sammelbehälter an einer Produktionsschrott-Anfallstelle einer Produktionsanlage derart zur Verfügung zu stellen, dass der an der Produktionsschrott-Anfallstelle anfallende Metallschrott in dem jeweiligen zur Verfügung gestellten Sammelbehälter gesammelt wird. Das System weist weiter eine Bestimmungseinrichtung auf, die dazu eingerichtet ist, eine Mengeninformation über ein Maß einer einem Sammelbehälter zugeführten Menge Metallschrott eines in der Produktionsanlage verarbeiteten Materials zu bestimmen, und eine Berechnungseinrichtung, die dazu eingerichtet ist, beim Zuführen von Mengen Metallschrott von verschiedenen in der Produktionsanlage verarbeiteten Materialien mit vorgegebenen Zusammensetzungen in einen Sammelbehälter eine Sammelbehälter-Zusammensetzungsinformation über die Zusammensetzung des gesamten in dem Sammelbehälter gesammelten Metallschrotts abhängig von den für die Mengen bestimmten Mengeninformationen und von vorgegebenen Zusammensetzungsinformationen über die vorgegebenen Zusammensetzungen zu berechnen.

Dieses System erlaubt die Durchführung des zuvor beschriebenen Verfahrens für das Sammeln von Metallschrotten und hat daher dieselben Vorteile. Entsprechend wird das beschriebene System vorzugsweise zur Durchführung des zuvor beschriebenen Verfahrens verwendet.

Im Folgenden werden verschiedene Ausführungsformen des Verfahrens und des Systems beschrieben, wobei die einzelnen Ausführungsformen jeweils unabhängig voneinander für das Verfahren und das System gelten. Darüber hinaus sind die einzelnen Ausführungsformen untereinander kombinierbar.

Bei einer Ausführungsform des Verfahrens wird die weitere Verwendung des Sammelbehälters abhängig von der Sammelbehälter-Zusammensetzungsinformation gesteuert. Insbesondere kann der Sammelbehälter abhängig von der Sammelbehälter-Zusammensetzungsinformation verwendet werden. Ergibt die Sammelbehälter-Zusammensetzungsinformation zum Beispiel, dass diese in eine vorgegebene Schrottklasse fällt, so kann des Sammelbehälter bzw. der darin enthaltene Metallschrott in einer Kreislaufführung für diese Schrottklasse verwendet werden, insbesondere für die Herstellung einer dieser Schrottklasse entsprechenden Legierung eingeschmolzen werden.

Bei einer Ausführungsform des Verfahrens und/oder des Systems wird die Sammelbehälter-Zusammensetzungsinformation dem Sammelbehälter zugeordnet. Bei einer entsprechenden Ausführungsform des Systems weist das System eine Zuordnungseinrichtung auf, die dazu eingerichtet ist, die berechnete Sammelbehälter-Zusammensetzungsinformation dem jeweiligen Sammelbehälter zuzuordnen. Auf diese Weise können verschiedene Sammelbehälter mit verschiedenen Sammelbehälter-Zusammensetzungsinformationen verwaltet und im weiteren Verlauf verwendet werden, zum Beispiel zur Auswahl für bestimmter Sammelbehälter zur Chargierung eines Schmelzofens mit einer vorgegebenen Zusammensetzung. Die Zuordnung der Sammelbehälter-Zusammensetzungsinformation zu dem jeweiligen Sammelbehälter erfolgt vorzugsweise durch Zuordnen der Sammelbehälter-Zusammensetzungsinformationen zu einer den Sammelbehälter bezeichnenden Kennung, beispielsweise einer Nummer. Dies kann insbesondere elektronisch erfolgen, beispielsweise in einer Tabelle, so dass die Sammelbehälter-Zusammensetzungsinformation unmittelbar weiter verwendet werden kann. Grundsätzlich ist es aber auch denkbar, die Zuordnung durch eine Beschriftung oder Beschilderung des Sammelbehälters vorzunehmen.

Bei einer weiteren Ausführungsform des Verfahrens und/oder des Systems wird eine Sammelbehälter-Mengeninformation über die Menge des gesamten in dem Sammelbehälter gesammelten Metallschrotts abhängig von der ersten und der zweiten Mengeninformation berechnet und dem Sammelbehälter zugeordnet. Die Sammelbehälter-Mengeninformation kann auf einfache Weise aus den bestimmten ersten und zweiten Mengeninformationen berechnet werden, insbesondere durch folgende Formel (2):

$$M = m_1 + m_2 = \sum_i m_i \qquad (2)$$

wobei $m_1$, $m_2$ die erste bzw. zweite Mengeninformationen und $M$ die Sammelbehälter-Mengeninformation sind. Auf diese Weise steht die Sammelbehälter-Mengeninformation für die weitere Verarbeitung des im Sammelbehälter enthaltenen Schrotts zur Verfügung, ohne dass eine gesonderte Bestimmung wie zum Beispiel durch Wiegen erforderlich ist. Bei einer entsprechenden Ausführungsform des Systems ist die Berechnungseinrichtung dazu eingerichtet, eine Sammelbehälter-Mengeninformation über die Menge des gesamten in dem Sammelbehälter gesammelten Metallschrotts abhängig von der ersten und der zweiten Mengeninformation zu berechnen, und das System weist eine Zuordnungseinrichtung auf, die dazu eingerichtet ist, die berechnete Sammelbehälter-Mengeninformation dem jeweiligen Sammelbehälter zuzuordnen. Die Zuordnung der Sammelbehälter-Mengeninformation kann analog zur Zuordnung der Sammelbehälter-Zusammensetzungsinformation erfolgen.

Bei einer weiteren Ausführungsform des Verfahrens und/oder des Systems wird als erste Mengeninformation das Gewicht der ersten Menge bestimmt und als zweite Mengeninformation das Gewicht der zweiten Menge bestimmt. Dies ist insbesondere dann vorteilhaft, wenn die Gehalte der ersten und zweiten Zusammensetzungsinformation in Gew.-% angegeben sind.

Das Gewicht der ersten Menge und das Gewicht der zweiten Menge können durch Wiegen bestimmt werden. Das Wiegen kann beispielsweise dadurch erfolgen, dass der Sammelbehälter während des Sammelns von Metallschrott auf einer Wägevorrichtung platziert ist, so dass anhand der Gewichtsänderung bei Zugabe der ersten bzw. zweiten Menge das Gewicht der ersten bzw. zweiten Menge bestimmt werden kann. Alternativ kann eine Zuführeinrichtung zur Zuführung des an der Produktionsschrott-Anfallstelle anfallenden Metallschrotts in den Sammelbehälter mit einer Wägeeinrichtung, beispielsweise einer Bandwaage, vorgesehen sein. Die Bestimmung des Gewichts der ersten Menge und der zweiten Menge erfolgt separat voneinander, so dass das Gewicht der ersten und der zweiten Menge unabhängig voneinander bekannt sind.

Bei einer bevorzugten Ausführungsform des Verfahrens werden die erste Mengeninformation, insbesondere das Gewicht der ersten Menge, und die zweite Mengeninformation, insbesondere das Gewicht der zweiten Menge, abhängig von vorgegebenen Produktionsparametern der Produktionsanlage bestimmt. Es wurde erkannt, dass der Anfall von Metallschrott an einer Produktionsschrott-Anfallstelle in vielen Fällen gut anhand der Produktionsparameter vorhersehbar und berechenbar ist. So ist zum Beispiel bei einer Bandbesäumung eines Aluminiumbands in der Regel aus den Produktionsparametern bekannt, wie breit der vom Aluminiumband abgetrennte Rand ist, wie hoch die Vorschubgeschwindigkeit des Aluminiumbands ist und welche Dicke das Aluminiumband aufweist. Daraus lässt sich ohne weiteres das pro Zeit anfallende Schrottvolumen berechnen und über die in der Regel bekannte Materialdichte das pro Zeit anfallende Schrottgewicht. Auch bei einer Stanzmaschine ist der Anteil des beim Stanzen übrig bleibenden Verschnitts typischerweise aus den Produktionsparametern bekannt, so dass aus der verarbeiteten Stückzahl und dem Verschnitt das pro Zeit anfallende Schrottgewicht bestimmt werden kann. Es wurde festgestellt, dass das Gewicht der ersten und zweiten Menge anhand der Produktionsparameter der Produktionsanlage häufig viel genauer berechnet werden kann, als dies mit einer Wägevorrichtung am Sammelbehälter möglich wäre. Darüber hinaus sind die Produktionsparameter in der Regel bekannt, so dass keine zusätzliche Wägevorrichtung notwendig ist.

Bei einer weiteren Ausführungsform des Verfahrens und/oder des Systems werden das erste Material und das zweite Material nacheinander in der Produktionsanlage verarbeitet. Dies ist insbesondere bei Produktionsanlagen zur Herstellung oder Verarbeitung von Bändern, insbesondere Aluminiumbändern der Fall, an denen nacheinander Aluminiumbänder aus verschiedenen Legierungen oder sogar verschiedenen Legierungsklassen verarbeitet werden.

Bei einer weiteren Ausführungsform des Verfahrens und/oder des Systems sind das erste und das zweite Material bandförmig. In diesem Fall kann der Metallschrott insbesondere in Form von Besäumschrott von einer Randbesäumung eines Aluminiumbands anfallen. Auch "Nahtschrott" von für eine Wärme- oder Ätzbehandlung zusammengefügten Einzelbändern, welche nach erfolgter Behandlung wieder vereinzelt werden, oder Ablängschrott kann an einer Produktionsschrott-Anfallstellen anfallen. Das zuvor beschriebene Verfahren lässt sich an einer Produktionsanlage zur Verarbeitung von bandförmigem Material besonders gut implementieren, da bei derartigen Anlagen die Zusammensetzung der verarbeiteten Materialien in der Regel sehr genau vorbekannt ist und die einfache Geometrie der Aluminiumbänder die Bestimmung des Gewichts der ersten Menge und der zweiten Menge mittels der Produktionsparameter der Produktionsanlage vereinfacht.

Bei einer weiteren Ausführungsform des Verfahrens und/oder des Systems wird dem Sammelbehälter mehrfach nacheinander oder kontinuierlich Metallschrott zugeführt und die Sammelbehälter-Zusammensetzungsinformation wird mehrfach nacheinander oder kontinuierlich berechnet. Auf diese Weise ist eine laufende Überwachung der im Sammelbehälter gesammelten Schrotte möglich, die es zum Beispiel ermöglicht, abhängig von der aktuellen Sammelbehälter-Zusammensetzungsinformation gezielt - manuell oder automatisch - einen Sammelbehälterwechsel durchzuführen. Die Sammelbehälter-Zusammensetzungsinformation kann beispielsweise in regelmäßigen Abständen, z.B. von 1 s, berechnet und damit aktualisiert werden.

Bei einer weiteren Ausführungsform des Verfahrens und/oder des Systems wird die Sammelbehälter-Zusammensetzungsinformation mit einer vorgegebenen Zusammensetzungsvorgabe verglichen. Vorzugsweise wird dem Sammelbehälter abhängig vom Ergebnis des Vergleichs eine Information zugeordnet. Die Zusammensetzungsvorgabe umfasst mindestens eine Vorgabe, insbesondere einen vorgegebenen Mindest- und/oder Maximalgehalt, für mindestens ein Legierungselement. Vorzugsweise umfasst die Zusammensetzungsvorgabe Vorgaben für mehrere Legierungselemente.

Die Zusammensetzungsvorgabe kann insbesondere den Vorgaben für eine der in DIN EN 573-3 definierten Aluminiumlegierungen entsprechen. Weiterhin kann die Zusammensetzungsvorgabe einer Aluminiumklasse entsprechen, wie zum Beispiel der Aluminiumgruppe 5xxx oder 6xxx oder einer engeren Aluminiumklasse wie zum Beispiel 12xx oder 51xx. Da es bei einer Kreislaufführung von Aluminiumlegierungen vor allem auf Obergrenzen bestimmter Nebenlegierungselemente ankommt, können sich die Vorgaben zumindest einiger, ggf. auch aller Nebenlegierungselemente in der Zusammensetzungsvorgabe auch auf Maximalgehalte beschränken, so dass jeweils ein Gehalt zwischen Null und dem jeweiligen Maximalgehalt vorgegeben ist.

Im Zuge des Vergleichs wird überprüft, ob die Sammelbehälter-Zusammensetzungsinformation der zuvor festgelegten Zusammensetzungsvorgabe entspricht. Zu diesem Zweck werden die Vorgaben der Zusammensetzungsinformation für einzelne Legierungselemente mit den Gehalten der entsprechenden Legierungselemente aus der Sammelbehälter-Zusammensetzungsinformation verglichen.

Abhängig vom Ergebnis dieses Vergleichs wird dem Sammelbehälter dann vorzugsweise eine Information zugeordnet, insbesondere eine Zuordnung zu einer Schrottklasse oder eine Deklaration als "Mischschrott". Im Falle einer Schrottklasse als Zusammensetzungsvorgabe kann festgelegt sein, dass bei einem positiven Vergleich, d.h. wenn die Sammelbehälter-Zusammensetzungsinformation der Zusammensetzungsvorgabe entspricht, der entsprechende Sammelbehälter der entsprechenden als Zusammensetzungsvorgabe verwendeten Schrottklasse zugeordnet wird und entsprechend in die Kreislaufführung zurückgeführt bzw. dort belassen werden kann. Bei einem negativen Vergleich, d.h. wenn die Sammelbehälter-Zusammensetzungsinformation der Zusammensetzungsvorgabe nicht entspricht, kann beispielsweise festgelegt sein, dass der entsprechende Sammelbehälter als "Mischschrott" deklariert wird und aus der Kreislaufführung ausgesondert wird.

Insbesondere kann jedem Sammelbehälter eine Information darüber zugeordnet werden, ob seine Sammelbehälter-Zusammensetzungsinformation der Zusammensetzungsvorgabe entspricht oder nicht. So lassen sich beispielsweise bei einer späteren Verwertung des in den Sammelbehältern gesammelten Metallschrotts ausschließlich Sammelbehälter auswählen, die den entsprechenden Vergleich bestanden haben. Damit ist eine spätere gezielte Auswahl von Sammelbehältern möglich, die bestimmte Zusammensetzungsvorgaben, wie z.B. Fe-Gehalt < 0,5 Gew.-% erfüllen. Entsprechend erfolgt die weitere Verwendung des Sammelbehälters vorzugsweise abhängig von der diesem Sammelbehälter zugeordneten Information.

Der Vergleich kann mit einem vorgegebenen Toleranzbereich durchgeführt werden, so dass zum Beispiel das Ergebnis des Vergleichs noch als positiv gilt, wenn die Sammelbehälter-Zusammensetzungsinformation die Vorgaben der Zusammensetzungsvorgabe erweitert um einen vorgegebenen Toleranzbereich erfüllt. Umfasst die Zusammensetzungsvorgabe zum Beispiel eine Vorgabe "Fe-Gehalt < 0,50 Gew.-%" und ist ein Toleranzbereich von 0,04 Gew.-% vorgegeben, so erfüllt auch ein Fe-Gehalt von 0,54 Gew.-% noch die Vorgabe. Alternativ zur Vorgabe eines Toleranzbereichs könnte auch die ursprüngliche Zusammensetzungsvorgabe bereits eine Vorgabe "Fe-Gehalt < 0,54 Gew.-%" enthalten.

Bei einer weiteren Ausführungsform des Verfahrens und/oder des Systems wird die Sammelbehälter-Zusammensetzungsinformation mit einer aktuell vorgegebenen Zusammensetzungsvorgabe verglichen und, wenn der Vergleich ergibt, dass die aktuell vorgegebene Zusammensetzungsvorgabe nicht mehr erfüllt wird, wird aus einem Satz vorgegebener Zusammensetzungsvorgaben eine andere Zusammensetzungsvorgabe, die die Sammelbehälter-Zusammensetzungsinformation erfüllt, ausgewählt und als neue aktuelle Zusammensetzungsvorgabe verwendet. Der Satz von Zusammensetzungsvorgaben kann hierbei insbesondere einem zuvor festgelegten Satz von Schrottklassen entsprechen.

Fällt die Sammelbehälter-Zusammensetzungsinformation beim Vergleich mit der vorgegeben Schrottklasse durch, so kann auf diese Weise eine andere Schrottklasse gewählt werden, welche von der Sammelbehälter-Zusammensetzungsinformation erfüllt wird. Dies ermöglicht, dass nach einem möglicherweise negativen Vergleichsergebnis mit einer aktuellen Zusammensetzungsvorgabe dem Sammelbehälter eine andere Zusammensetzungsvorgabe zugeordnet wird bzw. der Sammelbehälter einer anderen Schrottklasse zugeordnet wird, und er nicht, nur weil er die aktuelle Zusammensetzungsvorgabe nicht mehr erfüllt, als "Mischschrott" deklariert wird. Auf diese Weise ist beim Befüllen eines Sammelbehälters ein "Durchlaufen" mehrerer Schrottklassen möglich, bei dem dem Sammelbehälter jeweils eine noch erreichbare Zusammensetzungsvorgabe zugeordnet wird. Dadurch wird vermieden, dass der Sammelbehälter unmittelbar als "Mischschrott" deklariert wird, sobald er eine bestimmte Zusammensetzungsvorgabe nicht mehr erfüllt. Vorzugsweise wird der Sammelbehälter erst dann als "Mischschrott" deklariert, wenn die Sammelbehälter-Zusammensetzungsinformation mit keiner Schrottklasse aus dem festgelegten Satz von Schrottklassen übereinstimmt.

Die erste Zusammensetzungsvorgabe kann beispielsweise abhängig von der Zusammensetzung des dem Sammelbehälter zuerst zugeführten Metallschrotts ausgewählt werden. Anders als im Stand der Technik, bei dem der gesamte Sammelbehälter als "Mischschrott" deklariert und von der direkten Rückführung in die Kreislaufführung ausgeschlossen wird, wenn dem Sammelbehälter Schrott einer anderen Schrottklasse, der die erste Zusammensetzungsvorgabe nicht mehr erfüllt, zugeführt wird, ist die erste Zusammensetzungsvorgabe bei der zuvor beschriebenen Ausführungsform nicht notwendigerweise endgültig, sondern kann während des Befüllens des Sammelbehälters angepasst werden, um eine pauschale Deklaration als "Mischschrott" möglichst zu vermeiden.

Die Sammelbehälter-Zusammensetzungsinformation kann bei dem System insbesondere auch zur Steuerung des Sammelbehältersystems eingesetzt werden. Entsprechend weist das System bei einer Ausführungsform eine Steuereinrichtung auf, die dazu eingerichtet ist, das Sammelbehältersystem abhängig von der für einen Sammelbehälter berechneten Sammelbehälter-Zusammensetzungsinformation zu steuern.

Erfindungsgemäß wird die Sammelbehälter-Zusammensetzungsinformation mit einer vorgegebenen Zusammensetzungsvorgabe verglichen und die Zuführung von Metallschrott in den Sammelbehälter wird unterbrochen, sobald der Vergleich ergibt, dass die Zusammensetzungsvorgabe nicht mehr erfüllt wird. Bei dem System ist die Steuereinrichtung des Systems dazu eingerichtet, das Sammelbehältersystem entsprechend zu steuern. Auf diese Weise kann verhindert werden, dass sich der Schrott in dem Sammelbehälter noch weiter von der Zusammensetzungsvorgabe entfernt. Liegt die Sammelbehälter-Zusammensetzungsinformation noch innerhalb eines vorgegebenen Toleranzbereichs um die Zusammensetzungsvorgabe, so kann der Sammelbehälter sogar noch einer der Zusammensetzungsvorgabe zugeordneten Schrottklasse zugeordnet werden. Beim Unterbrechen der Zuführung wird der Schrott vorzugsweise möglichst unmittelbar in einen anderen Sammelbehälter umgeleitet, beispielsweise durch Austausch der Sammelbehälter, um den Betrieb der Produktionsanlage möglichst wenig zu behindern.

Bei einer weiteren Ausführungsform des Verfahrens und/oder des Systems wird eine prognostizierte Sammelbehälter-Zusammensetzungsinformation abhängig von der aktuellen Sammelbehälter-Zusammensetzungsinformation und von einem vorgegebenen Produktionsplan der Produktionsanlage berechnet. Auf diese Weise kann überwacht werden, ob der bei einer zukünftigen Produktion anfallenden Metallschrott zu einem Abweichen der Sammelbehälter-Zusammensetzung von der Zusammensetzungsvorgabe führen würde.

Der Produktionsplan beinhaltet insbesondere Informationen über die anstehende geplante Produktion an der Produktionsanlage, insbesondere über die Zusammensetzung der als nächstes in der Produktionsanlage zu verwendenden Materialien. Dadurch ist es möglich, mit dem Produktionsplan eine prognostizierte Sammelbehälter-Zusammensetzungsinformation zu berechnen.

Bei einer weiteren Ausführungsform des Verfahrens und/oder des Systems wird ein Unterbrechungs-Zeitpunkt zur Unterbrechung der Zuführung von Metallschrott in den Sammelbehälter abhängig von der prognostizierten Sammelbehälter-Zusammensetzungsinformation und einer Zusammensetzungsvorgabe bestimmt. Insbesondere kann die Steuereinrichtung des Systems dazu eingerichtet sein, das Sammelbehältersystem entsprechend zu steuern. Auf diese Weise kann die Zuführung rechtzeitig unterbrochen werden, bevor die Sammelbehälter-Zusammensetzungsinformation aus der Zusammensetzungsvorgabe herausläuft. Vorzugsweise erfolgt zum bestimmten Unterbrechungs-Zeitpunkt dann auch eine Unterbrechung der Zuführung.

Bei einer weiteren Ausführungsform des Verfahrens und/oder des Systems erfolgt zu einem Wiederaufnahme-Zeitpunkt nach dem Unterbrechungs-Zeitpunkt eine Wiederaufnahme der Zuführung von Metallschrott in den Sammelbehälter, wobei der Wiederaufnahme-Zeitpunkt abhängig von einem vorgegebenen Produktionsplan der Produktionsanlage und der Zusammensetzungsvorgabe bestimmt wird. Insbesondere kann die Steuereinrichtung des Systems dazu eingerichtet sein, das Sammelbehältersystem entsprechend zu steuern. Dies ermöglicht das Weiterbefüllen von Sammelbehältern nach einer Unterbrechung, so dass die Sammelbehältervolumen besser ausgenutzt werden können.

So kann es beispielsweise aufgrund des Produktionsplans sinnvoll sein, die Schrottzufuhr zu einem Sammelbehälter zu unterbrechen, wenn eine weitere Zuführung dazu führen würde, dass die Zusammensetzungsvorgabe nicht mehr erfüllt wird, und zu einem späteren Wiederaufnahme-Zeitpunkt, insbesondere nach einem Materialwechsel in der Produktionsanlage, die Zuführung wiederaufgenommen wird.

Auch kann es sinnvoll sein, die Schrottzufuhr zu einem Sammelbehälter, der die Zusammensetzungsvorgabe bereits nicht mehr erfüllt, zu unterbrechen und zu einem späteren Wiederaufnahme-Zeitpunkt nach einem Materialwechsel wiederaufzunehmen, wenn die Zusammensetzungsvorgabe durch Zuführen des dann anfallenden Schrotts wieder erreicht werden kann.

Durch die auf diese Weise gewonnene Flexibilität lässt sich das Sammeln von Metallschrotten weiter optimieren, wobei Zusammensetzungsvorgaben wie beispielsweise Schrottklassen eingehalten werden und demnach weniger Metallschrott der Kreislaufführung entzogen wird.

Um eine effektive Befüllung der Sammelbehälter zu erreichen, ist bei einer weiteren Ausführungsform vorgesehen, die Zuführung von Schrott zu dem Sammelbehälter erst zu beenden, wenn der Sammelbehälter eine vorgegebene Mindestmenge Schrott enthält. Zwischenzeitliche Unterbrechungen der Zuführung mit anschließender Wiederaufnahme können vorzugsweise zugelassen werden.

Bei einer weiteren Ausführungsform des Verfahrens und/oder des Systems wird die Zusammensetzungsvorgabe abhängig von einem vorgegebenen Produktionsplan der Produktionsanlage vorgegeben. Dadurch kann bei der Auswahl der Zusammensetzungsvorgabe die Zusammensetzungen der anstehenden Produktion, insbesondere die Zusammensetzung des bei der anstehenden Produktion anfallenden Metallschrotts, berücksichtigt werden. Steht für die Produktionsanlage zum Beispiel die Verarbeitung von 5xxx-Materialien an, so kann auf diese Weise eine entsprechende Schrottklasse für 5xxx-Schrotte gewählt werden.

Bei einer weiteren Ausführungsform wird, wenn die Sammelbehälter-Zusammensetzungsinformation eine vorgegebene Zusammensetzungsvorgabe nicht erfüllt, ein weiterer Sammelbehälter aus einer Mehrzahl weiterer Sammelbehälter mit jeweils zugeordneter Sammelbehälter-Zusammensetzungsinformation derart ausgewählt, dass die Gesamtmenge des in dem Sammelbehälter und in dem ausgewählten weiteren Sammelbehälter gesammelten Metallschrotts die vorgegebene Zusammensetzungsvorgabe erfüllt, und der in dem Sammelbehälter und in dem ausgewählten weiteren Sammelbehälter gesammelte Metallschrott werden miteinander kombiniert. Auf diese Weise kann ein nachträgliches Erfüllen der Zusammensetzungsvorgabe erreicht werden, indem der Schrott mehrerer Sammelbehälter miteinander verschnitten wird. Der Metallschrott der Sammelbehälter kann dadurch miteinander kombiniert werden, dass er gemeinsam in einen Misch-Sammelbehälter gegeben wird. Bei dem Misch-Sammelbehälter kann es sich um den ursprünglichen Sammelbehälter, den weiteren Sammelbehälter oder um einen anderen Sammelbehälter handeln.

Weitere Vorteile und Merkmale des Verfahrens und des Systems ergeben sich aus der nachfolgenden Beschreibung von Ausführungsbeispielen, wobei auf die beigefügte Zeichnung Bezug genommen wird.

In der Zeichnung zeigen

Fig. 1          ein Beispiel eines Verfahrens aus dem Stand der Technik,

Fig. 2          ein erstes Ausführungsbeispiel des erfindungsgemäßen Verfahrens,

Fig. 3          ein zweites Ausführungsbeispiel des erfindungsgemäßen Verfahrens,

Fig. 4          ein drittes Ausführungsbeispiel des erfindungsgemäßen Verfahrens und

Fig. 5a-b       ein viertes Ausführungsbeispiel des erfindungsgemäßen Verfahrens.

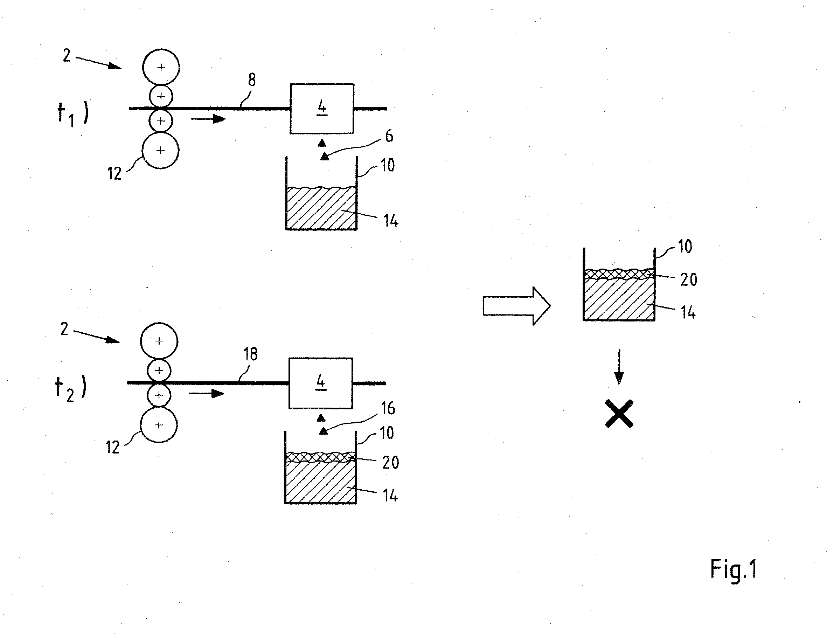

Fig. 1 illustriert ein Beispiel eines Verfahrens zum Sammeln von Metallschrotten in Sammelbehältern aus dem Stand der Technik.

Bei dem Verfahren fällt an einer Produktionsschrott-Anfallstelle 4 einer Produktionsanlage 2 Metallschrott 6 eines in der Produktionsanlage 2 verarbeiteten Materials 8 an, der an der Produktionsschrott-Anfallstelle 4 einem Sammelbehälter 10 zugeführt und darin gesammelt wird.

Bei der Produktionsanlage 2 handelt es sich im vorliegenden Beispiel um eine Produktionsanlage zur Herstellung und/oder Verarbeitung von Aluminiumbändern, nämlich um ein Walzwerk, wie durch das Walzgerüst 12 symbolisiert wird. Bei dem in der Produktionsanlage 2 verarbeiteten Material 8 handelt es sich entsprechend um ein Aluminiumband 8 aus einer Aluminiumlegierung. Bei der Produktionsschrott-Anfallstelle 4 handelt es sich im vorliegenden Beispiel um den Bereich einer Besäumschere, mit der die Kanten das gewalzten Aluminiumbands 8 besäumt werden. Der Metallschrott 6 kann entsprechend als kontinuierlicher von dem Aluminiumband 8 abgeschnittener Streifen anfallen. Im vorliegenden Beispiel ist jedoch eine Zerkleinerungsvorrichtung vorgesehen, die den langen Streifen in kleinere Stücke zerkleinert, bevor diese dem Sammelbehälter 10 zugeführt werden.

Fig. 1 zeigt, wie zu einem ersten Produktionszeitpunkt $t_1$ ein Aluminiumband 8 aus einer ersten Aluminiumlegierung, zum Beispiel aus einer 5xxx-Legierung, verarbeitet wird und an der Besäumschere 4 Aluminiumschrott 6 der entsprechenden Zusammensetzung anfällt. Zu diesem Zeitpunkt enthält der Sammelbehälter 10 ausschließlich eine Menge Aluminiumschrott 14 mit dieser Zusammensetzung.

Im Anschluss an das Aluminiumband 8 wird nun jedoch ein weiteres Aluminiumband 18 aus einer zweiten Aluminiumlegierung, zum Beispiel aus einer 6xxx-Legierung, verarbeitet, so dass an der Besäumschere 12 Aluminiumschrott 16 der entsprechenden Zusammensetzung anfällt, der ebenfalls dem Sammelbehälter 10 zugeführt wird.

Dadurch enthält der Sammelbehälter 10 nun eine Menge Metallschrott 14 der ersten Aluminiumlegierung und eine Menge Metallschrott 20 der zweiten Aluminiumlegierung.

Im Stand der Technik wird ein solcher Sammelbehälter 10 bzw. dessen Inhalt als "Mischschrott" mit unbekannter Zusammensetzung deklariert und aus der Kreislaufführung ausgesondert (in Fig. 1 durch ein "$\times$" symbolisiert).

Um den Aluminiumschrott aus dem Sammelbehälter 10 dennoch für die Kreislaufführung verwenden zu können, kann der gesamte Inhalt des Sammelbehälters 10 gesondert analysiert werden. Dies ist jedoch ein recht aufwändiger Vorgang.

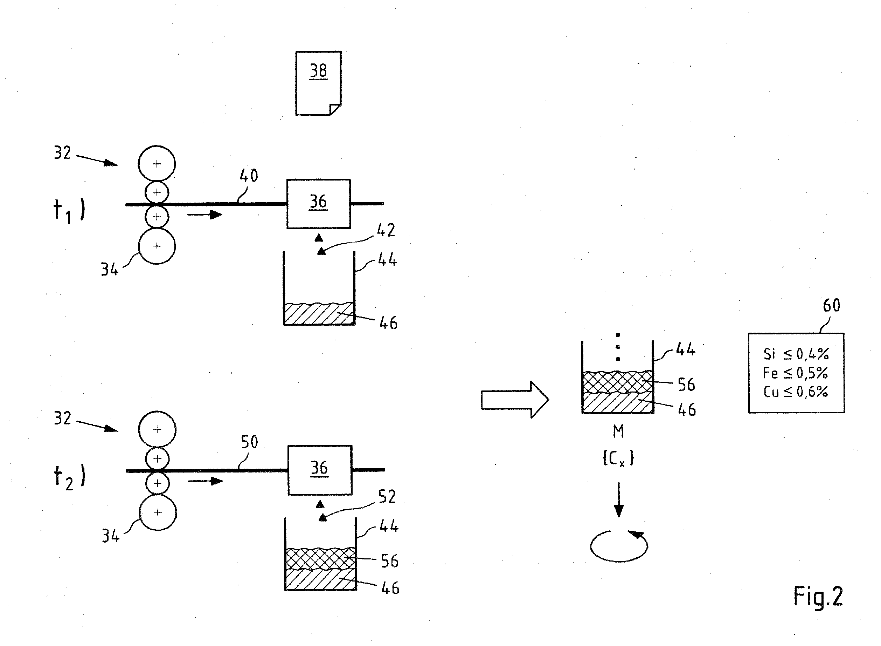

Fig. 2 zeigt nun ein erstes Ausführungsbeispiel eines erfindungsgemäßen Verfahrens an einer Produktionsanlage 32 zur Verarbeitung von Aluminiumbändern. Bei der Produktionsanlage 32 kann es sich wie in Fig. 2 durch das Walzgerüst 34 illustriert um eine Walzanlage für Aluminiumbänder handeln. Das Verfahren kann aber auch an anderen Produktionsanlagen für Aluminiumbänder oder auch an anderen Produktionsanlagen für andere Materialien als Aluminiumbänder, wie zum Beispiel an Produktionsanlagen zur Verarbeitung von Aluminiumblechen, durchgeführt werden. Die Produktionsanlage 32 weist eine Produktionsschrott-Anfallstelle 36 auf, die sich im vorliegenden Beispiel an einer Besäumschere befindet. Es sind jedoch auch andere Produktionsschrott-Anfallstellen denkbar.

In der Produktionsanlage 32 werden gemäß einem vorgegebenen Produktionsplan 38 nacheinander verschiedene Aluminiumbänder mit unterschiedlichen Zusammensetzungen verarbeitet. Der Produktionsplan 38 gibt insbesondere die Reihenfolge der nacheinander zu verarbeitenden Aluminiumbänder vor und enthält Angaben zur Zusammensetzung und ggf. zu weiteren Eigenschaften der Bänder (z.B. (Ausgangs)dicke, (Ausgangs)breite etc.) sowie Produktionsparameter für die Verarbeitung der Bänder (z.B. Abwalzgrade, Besäumungsbreite, Vorschubgeschwindigkeit etc.). Bei dem Produktionsplan 38 kann es sich um einen an einer Stelle gespeicherten Datensatz handeln; die Informationen des Produktionsplans können aber auch an verschiedenen Stellen, zum Beispiel in verschiedenen Datensätzen, vorliegen.

Zu einem ersten Produktionszeitpunkt $t_1$ wird in der Produktionsanlage 32 das erste Aluminiumband 40 mit einer ersten Zusammensetzung verarbeitet. Der Produktionsplan 38 enthält eine Zusammensetzungsinformation $\{c_{x,1}\}$ über die erste Zusammensetzung, wobei $c_{x,1}$ den Gehalt einer Legierungskomponente $x$ in der ersten Zusammensetzung bezeichnet und $\{c_{x,1}\}$ einen Satz von Gehalten verschiedener Legierungskomponenten $x$ bezeichnet. Im Produktionsplan 38 können beispielsweise die Gehalte der wichtigsten Nebenlegierungselemente (insb. Si, Fe, Cu, Mn, Mg, Cr, Ni, Zn, Ti, Ga, V) angegeben sein. Es ist auch denkbar, dass der Produktionsplan 38 anstelle der Zusammensetzungsinformation einen Verweis auf eine separat gespeicherte Zusammensetzungsinformation enthält, beispielsweise einen Verweis auf ein Material-Zertifikat.

Während der Verarbeitung des ersten Aluminiumlegierungsbands fällt an der Produktionsschrott-Anfallstelle 36 entsprechend Metallschrott 42 mit der ersten Zusammensetzung an und wird einem an der Produktionsschrott-Anfallstelle 36 angeordneten Sammelbehälter 44 zugeführt und dort gesammelt. Im Sammelbehälter 44 befindet sich entsprechend eine erste Menge 46 des Metallschrotts des ersten Materials, vorliegend also vom ersten Aluminiumband 40.

Zu einem zweiten Produktionszeitpunkt $t_2$, der nach dem Produktionszeitpunkt $t_1$ liegt, wird das zweite im Produktionsplan 38 aufgeführte Aluminiumband 50 aus einer zweiten Aluminiumlegierung verarbeitet. Der Produktionsplan 38 enthält eine entsprechende Zusammensetzungsinformation $\{c_{x,2}\}$ über die Zusammensetzung des zweiten Aluminiumbands. An der Produktionsschrott-Anfallstelle 36 fällt entsprechend Metallschrott 52 der zweiten Zusammensetzung an und wird dem Sammelbehälter 44 zugeführt und dort gesammelt. Neben der ersten Menge 46 enthält der Sammelbehälter 44 nun auch eine zweite Menge 56 des Metallschrotts des zweiten Materials, vorliegend also vom zweiten Aluminiumband 50.

Gegenüber dem Verfahren aus dem Stand der Technik in Fig. 1 wird bei dem vorliegenden Verfahren in Fig. 2 das Gewicht $m_1$ der ersten Menge 46 und das Gewicht $m_2$ der zweiten Menge 56 bestimmt. Dies kann durch Wägung erfolgen oder anhand vorgegebener Produktionsparameter.

Im vorliegenden Fall der Kantenbesäumung eines Aluminiumbands können $m_1$ und $m_2$ aus den im Produktionsplan 38 gespeicherten Produktionsparametern, nämlich aus der Breite des an der Besäumschere abgetrennten Randstreifens des Aluminiumbands 40 bzw. 50, der Dicke des Aluminiumbands 40 bzw. 50 und der Vorschubgeschwindigkeit des Aluminiumbands 40 bzw. 50 an der Besäumschere bestimmt werden. Aus den zuvor genannten Produktionsparametern und der bekannten Dichte des Aluminiumbands 40 bzw. 50 lässt sich das Gewicht der anfallenden Schrottmenge pro Zeit bestimmen. Durch Summation bzw. Integration dieses Werts über die Dauer der Verarbeitung des jeweiligen Aluminiumbands 40 bzw. 50 können das aktuelle Gewicht $m_1$ der ersten Menge und das aktuelle Gewicht $m_2$ der zweiten Menge berechnet werden.

Aus den aus dem Produktionsplan 38 bekannten Zusammensetzungsinformationen $\{c_{x,2}\}$ und $\{c_{x,2}\}$ und den bestimmten Gewichten $m_1$ und $m_2$ kann dann mit der Formel (1) eine Sammelbehälter-Zusammensetzungsinformation $\{C_x\}$ über die Zusammensetzung des gesamten in dem Sammelbehälter 44 gesammelten Schrotts berechnet werden.

Mit der auf diese Weise bestimmten Sammelbehälter-Zusammensetzungsinformation $\{C_x\}$ kann der Sammelbehälter 44 bzw. der darin enthaltene Metallschrott durch Vergleich mit einer Zusammensetzungsvorgabe 60, die Grenzwerte für verschiedene Legierungselemente vorgibt, einer Schrottklasse zugeordnet werden und entsprechend dieser Schrottklasse weiterverarbeitet werden. Anders als bei dem Verfahren aus dem Stand der Technik in Fig. 1 kann der Sammelbehälter 44 damit in der Kreislaufführung belassen werden (in Fig. 2 durch den Kreislaufpfeil symbolisiert).

Zu diesem Zweck werden dem Sammelbehälter 44 die Sammelbehälter-Zusammensetzungsinformation $\{C_x\}$ und eine aus Summation von $m_1$ und $m_2$ bestimmte Sammelbehälter-Mengeninformation M zugeordnet, so dass diese Informationen für die weitere Verarbeitung des Metallschrotts im Sammelbehälter 44 zur Verfügung stehen.

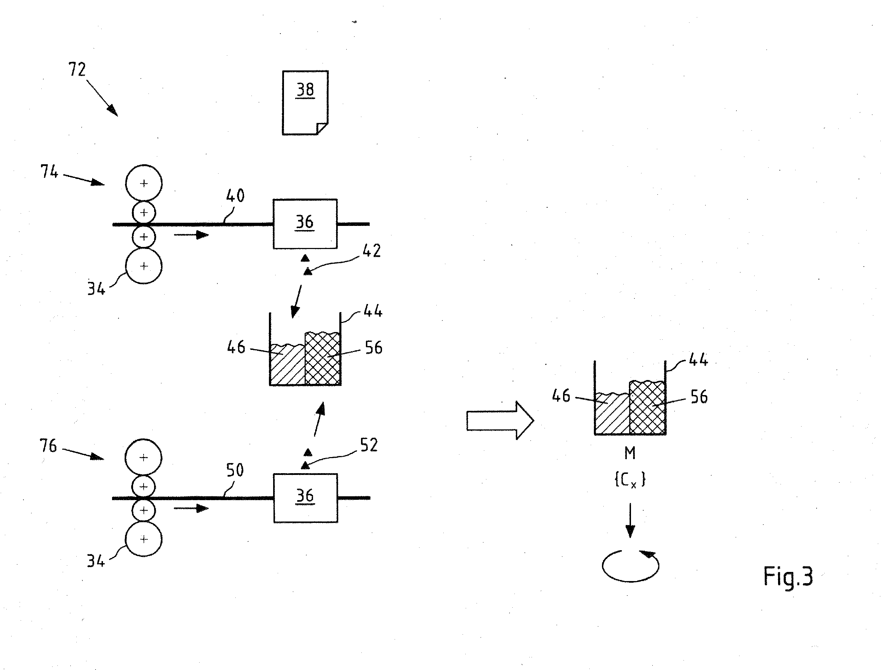

Fig. 3 zeigt ein zweites Ausführungsbeispiel des erfindungsgemäßen Verfahrens. Den Elementen aus Fig. 2 entsprechende Elemente sind mit gleichen Bezugszeichen versehen.

Bei dem Verfahren in Fig. 3 umfasst die Produktionsanlage 72 zwei Produktionslinien 74, 76, bei denen es sich im vorliegenden Beispiel um zwei Walzlinien handelt. Die Produktionslinien 74, 76 weisen jeweils eine Produktionsschrott-Anfallstelle 36 an einer jeweiligen Besäumschere auf. Entsprechend einem Produktionsplan 38 werden in der ersten Produktionslinie 74 ein erstes Aluminiumband 40 aus einer ersten Aluminiumlegierung und in der zweiten Produktionslinie 76 zeitgleich ein zweites Aluminiumband 50 aus einer zweiten Aluminiumlegierung verarbeitet, so dass an den Produktionsschrott-Anfallstellen 36 Metallschrott 42 des ersten Aluminiumbands 40 bzw. Metallschrott 52 des zweiten Aluminiumbands 50 anfällt. Der anfallende Metallschrott wird einem gemeinsamen Sammelbehälter 44 zugeführt und dort gesammelt.

Wie bei dem Verfahren in Fig. 2 werden anhand der im Produktionsplan 38 angegebenen Produktionsparameter das Gewicht $m_1$ der sich aktuell im Sammelbehälter 4 befindlichen ersten Menge 46 des Metallschrotts des ersten Aluminiumbands 40 und das Gewicht $m_2$ der sich aktuell im Sammelbehälter 4 befindlichen zweiten Menge 56 des Metallschrotts des zweiten Aluminiumbands 50 berechnet. In Fig. 3 sind die Mengen 46 und 56 schematisch nebeneinander gezeichnet; tatsächlich liegen die Mengen im Sammelbehälter 44 vermischt vor.

Aus den im Produktionsplan 38 enthaltenen Zusammensetzungsinformationen $\{c_{x,1}\}$ und $\{c_{x,2}\}$ und den bestimmten Gewichten $m_1$ und $m_2$ kann somit gemäß Formel (1) die Sammelbehälter-Zusammensetzungsinformation $\{C_x\}$ des gesamten sich aktuell im Sammelbehälter 44 befindlichen Metallschrotts bestimmt werden. Dies ermöglicht wie zu Fig. 2 beschrieben eine Zuordnung des Sammelbehälters 44 zu einer Schrottklasse sowie die entsprechende Weiterverarbeitung in der Kreislaufführung.

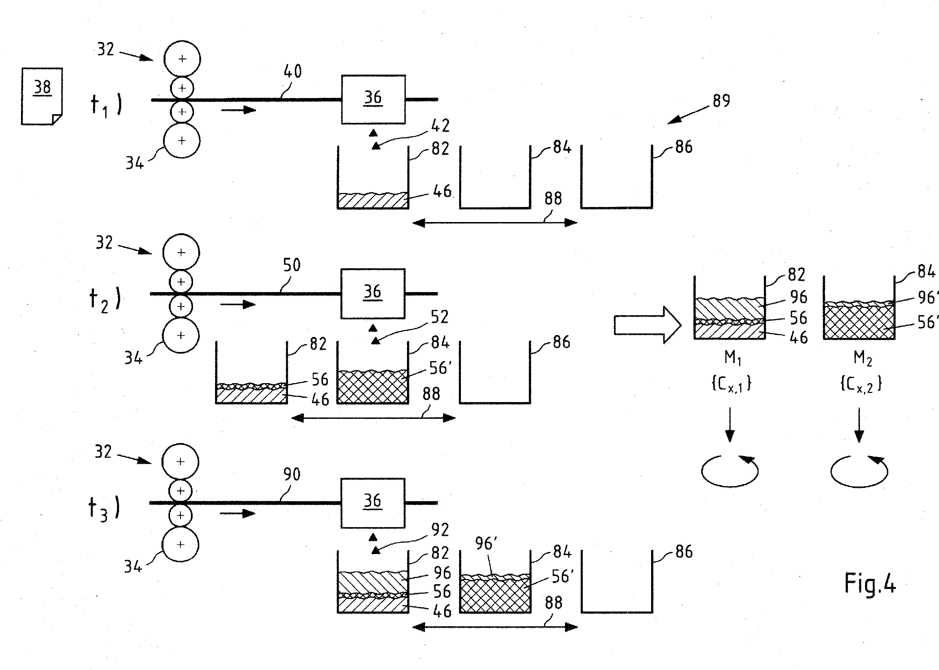

Fig. 4 zeigt ein drittes Ausführungsbeispiel des erfindungsgemäßen Verfahrens. Das Verfahren wird an der Produktionsanlage 32 aus Fig. 2 durchgeführt.

Bei dem in Fig. 4 dargestellten Verfahren werden mehrere Sammelbehälter 82, 84, 86 vorgehalten, welche während der Produktion an der Produktionsanlage 32 getauscht werden können (Pfeil 88). Die Sammelbehälter 82, 84, 86 mit dem Tauschmechanismus 88 bilden ein Sammelbehältersystem 89.

Gemäß einem Produktionsplan 38 werden an der Produktionsanlage 32 nacheinander drei Aluminiumbänder 40, 50, 90 aus verschiedenen Aluminiumlegierungen verarbeitet.

Zu einem ersten Produktionszeitpunkt $t_1$ wird in der Produktionsanlange 32 das erstes Aluminimumband 40 verarbeitet, so dass an der Produktionsschrott-Anfallstelle 36 Aluminiumschrott 42 mit einer der Legierung des ersten Aluminiumbands 40 entsprechenden ersten Zusammensetzung anfällt, zu der eine Zusammensetzungsinformation $\{c_{x,1}\}$ im Produktionsplan 38 gespeichert ist.

Zu einem zweiten Produktionszeitpunkt $t_2$ wird in der Produktionsanlange 32 das zweite Aluminimumband 50 verarbeitet, so dass an der Produktionsschrott-Anfallstelle 36 Aluminiumschrott 52 mit einer der Legierung des zweiten Aluminiumbands 50 entsprechenden zweiten Zusammensetzung anfällt, zu der eine Zusammensetzungsinformation $\{c_{x,2}\}$ im Produktionsplan 38 gespeichert ist.

Zu einem dritten Produktionszeitpunkt $t_2$ wird in der Produktionsanlange 32 das dritte Aluminimumband 90 verarbeitet, so dass an der Produktionsschrott-Anfallstelle 36 Aluminiumschrott 92 mit einer der Legierung des dritten Aluminiumbands 90 entsprechenden dritten Zusammensetzung anfällt, zu der eine Zusammensetzungsinformation $\{c_{x,3}\}$ im Produktionsplan 38 gespeichert ist.

Beim Betrieb wird anhand der im Produktionsplan 38 enthaltenen Produktionsparameter das Gewicht der jeweils aktuellen Menge Metallschrott eines der Aluminiumbänder 40, 50, 90 bestimmt, die einem jeweiligen der Sammelbehälter 82, 84, 86 zugeführt wurde. Mit diesen bestimmten Gewichten und den im Produktionsplan 38 enthaltenen Zusammensetzungsinformationen kann für jeden der Sammelbehälter 82, 84, 86 eine aktuelle Sammelbehälter-Zusammensetzungsinformation bestimmt und mit einer jeweiligen Zusammensetzungsvorgabe verglichen werden.

Zum ersten Produktionszeitpunkt $t_1$ ist zunächst der Sammelbehälter 82 an der Produktionsschrott-Anfallstelle 36 positioniert, so dass der Aluminiumschrott 42 diesem Sammelbehälter 82 zugeführt wird, während die anderen Sammelbehälter 84, 86 zum Beispiel in einer Warteposition geparkt sind.

Nach einem Wechsel auf das zweite Aluminiumband 50 ergibt der Vergleich der Zusammensetzungsvorgabe für den ersten Sammelbehälter 82 mit der für den ersten Sammelbehälter berechneten Sammelbehälter-Zusammensetzungsinformation, dass die Sammelbehälter-Zusammensetzungsinformation von der Zusammensetzungsvorgabe abweicht. Um eine weitere Abweichung zu verhindern, wird die Zuführung von Metallschrott zum Sammelbehälter 82 unterbrochen, indem dieser durch den Sammelbehälter 84 ersetzt wird (s. Zeitpunkt $t_2$). Der Metallschrott 52 wird dann weiter in dem zweiten Sammelbehälter 84 gesammelt.

Um bereits eine erste Abweichung von der Zusammensetzungsvorgabe zu verhindern, kann anhand des Produktionsplans 38 alternativ eine prognostizierte Sammelbehälter-Zusammensetzungsinformation und damit ein Unterbrechungs-Zeitpunkt bestimmt werden, an dem die Zuführung von Metallschrott zum Sammelbehälter 82 unterbrochen wird.

Nach dem Wechsel auf das dritte Aluminiumband 90 ergibt ein Vergleich der Zusammensetzungsvorgabe für den zweiten Sammelbehälter 82 mit der für den zweiten Sammelbehälter berechneten Sammelbehälter-Zusammensetzungsinformation, dass die Sammelbehälter-Zusammensetzungsinformation von der Zusammensetzungsvorgabe abweicht. Um eine weitere Abweichung zu verhindern, wird die Zuführung von Metallschrott zum Sammelbehälter 84 unterbrochen.

Dies könnte dadurch erfolgen, dass der zweite Sammelbehälter 84 durch den dritten Sammelbehälter 86 ersetzt wird. Wenn jedoch die Berechnung einer prognostizierten Sammelbehälter-Zusammensetzungsinformation für den ersten Sammelbehälter 82 ergibt, dass das weitere Befüllen dieses Sammelbehälters mit dem Metallschrott 92 des dritten Aluminiumbands 90 keine Abweichung von der Zusammensetzungsvorgabe des ersten Sammelbehälters 82 bewirkt oder sogar eine etwaige Abweichung von der Zusammensetzungsvorgabe kompensiert, so kann der zweite Sammelbehälter 84 durch den ersten Sammelbehälter ersetzt werden (s. Zeitpunkt $t_3$). Auf diese Weise kann auch die Kapazität des ersten Sammelbehälters 82 besser ausgenutzt werden.

Der erste Sammelbehälter 82 weist damit schließlich eine Menge 46 des Metallschrotts 42, eine (kleine) Menge 56 des Metallschrotts 52 und eine Menge 96 des Metallschrotts 96 auf. Der zweite Sammelbehälter 84 weist eine Menge 56' des Metallschrotts 56 und eine (kleine) Menge 96' des Metallschrotts 92 auf.

Der erste und zweite Sammelbehälter 82, 84 können im Anschluss anhand der jeweils berechneten Sammelbehälter-Zusammensetzungsinformation $\{C_{x,1}\}$ bzw. $\{C_{x,2}\}$ einer jeweiligen Schrottklasse zugeordnet und entsprechend weiterverwendet werden.

Auf diese Weise lassen sich Sammelbehälter mit "Mischschrotten", welche keinerlei Zusammensetzungsvorgabe erfüllen oder keiner Schrottklasse zugeordnet werden können, effizient reduzieren. Dies kann insbesondere durch ein intelligentes Unterbrechen und Wiederaufnehmen der Zuführung von Aluminiumschrott zu Sammelbehältern erreicht werden.

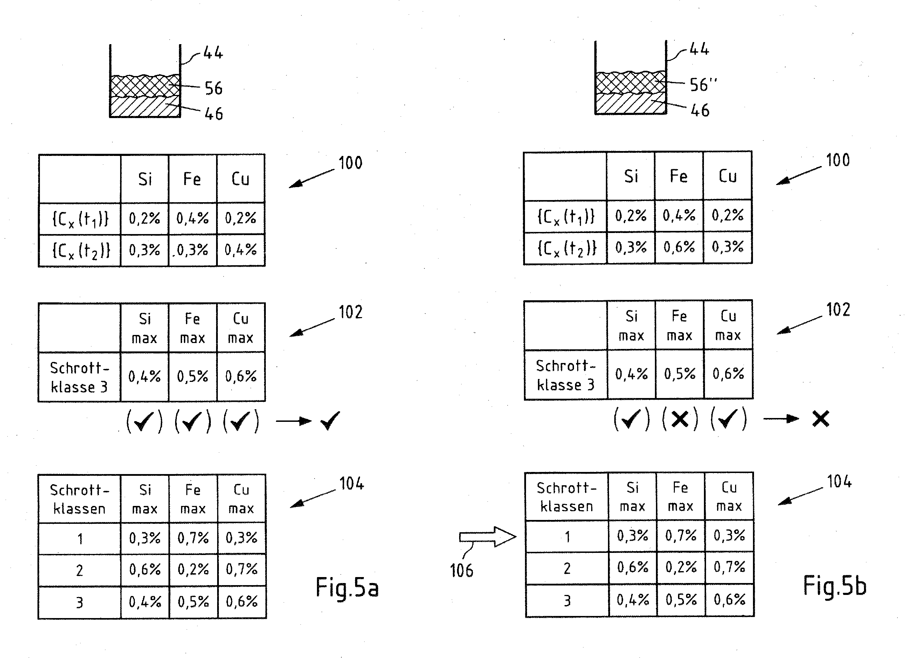

Anhand der Fig. 5a-b soll noch ein weiteres Ausführungsbeispiel des Verfahrens beschrieben werden, bei dem die Zusammensetzungsvorgabe für einen Sammelbehälter 44 abhängig von der Sammelbehälter-Zusammensetzungsinformation angepasst wird.

In Fig. 5a ist der Sammelbehälter 44 dargestellt, dem an einer Produktionsschrott-Anfallstelle zunächst eine erste Menge 46 Metallschrott von einem ersten Aluminiumband mit einer ersten Zusammensetzung und anschließend eine zweite Menge 56 Metallschrott von einem zweiten Aluminiumband mit einer zweiten Zusammensetzung zugeführt wird. Während des Zuführens von Metallschrott wird auf die bereits zuvor erläuterte Weise die jeweils aktuelle Sammelbehälter-Zusammensetzungsinformation berechnet.

In der unter dem Sammelbehälter 44 angeordneten Tabelle 100 ist dargestellt, wie sich die berechnete Sammelbehälter-Zusammensetzungsinformation im Laufe der Befüllung des Sammelbehälters 44 verändert. Die Zeilen $\{C_x(t_1)\}$ bzw. $\{C_x(t_2)\}$ zeigen exemplarisch die Gehalte für die Nebenlegierungskomponenten Si, Fe, Cu der Sammelbehälter-Zusammensetzungsinformation zum Produktionszeitpunkt $t_1$ bzw. $t_2$ (s. Fig. 2). Zum Zeitpunkt $t_1$ stimmt $\{C_x(t_1)\}$ mit der Zusammensetzung des ersten Aluminiumbands überein, da der Sammelbehälter lediglich Schrott von diesem Aluminiumband enthält. Zum Zeitpunkt $t_2$ enthält der Sammelbehälter die Mengen 46 und 56, so dass sich die Gehalte von $\{C_x(t_2)\}$ gemäß Formel (1) ergeben.

Während der Befüllung des Sammelbehälters 44 wird die jeweils aktuelle Sammelbehälter-Zusammensetzungsinformation mit einer aktuellen Zusammensetzungsvorgabe "Schrottklasse 3" aus einem Satz vorgegebener Zusammensetzungsvorgaben "Schrottklasse 1", "Schrottklasse 2", ... verglichen. In Fig. 5a sind die aktuelle Zusammensetzungsvorgabe anhand der Tabelle 102 und der Satz von Zusammensetzungsvorgaben anhand der Tabelle 104 dargestellt.

In dem in Fig. 5a dargestellten Fall erfüllt die Sammelbehälter-Zusammensetzungsinformation die aktuelle Zusammensetzungsvorgabe "Schrottklasse 3" zu beiden Zeiten $t_1$ und $t_2$.

Fig. 5b zeigt nun einen Fall, bei dem in der Produktionsanlage 32 ein zweites Aluminiumband mit einer anderen Zusammensetzung verwendet wird, wodurch sich die Sammelbehälter-Zusammensetzungsinformation zum Zeitpunkt $t_2$, zu dem neben der Menge 46 auch eine Menge 56" Metallschrott des zweiten Aluminiumbands mit der anderen Zusammensetzung enthalten ist, erheblich verändert hat, so dass die aktuelle Zusammensetzungsvorgabe "Schrottklasse 3" nicht mehr erfüllt wird. Anstatt den Sammelbehälter 44 nun als "Mischschrott" zu deklarieren, wird beim vorliegenden Verfahren aus dem Satz von Zusammensetzungsvorgaben (Tabelle 104) eine andere Zusammensetzungsvorgabe ("Schrottklasse 1", Pfeil 106) ausgewählt, die die aktuelle Sammelbehälter-Zusammensetzungsinformation erfüllt. Auf diese Weise kann der Sammelbehälter 44 auch in diesem Fall einer Schrottklasse zugeordnet und in der Kreislaufführung gehalten werden.

**Patentansprüche**

1.  Verfahren für das Sammeln von Metallschrotten (42, 52, 92), insbesondere Aluminiumschrotten, in Sammelbehältern (44, 82, 84, 86),

    - bei dem an einer oder mehreren Produktionsschrott-Anfallstellen (36) einer Produktionsanlage (32, 72) erster Metallschrott (42) eines ersten in der Produktionsanlage (32, 72) verarbeiteten Materials (40) mit einer vorgegebenen ersten Zusammensetzung und zweiter Metallschrott (52) eines zweiten in der Produktionsanlage (32, 72) verarbeiteten Materials (50) mit einer vorgegebenen zweiten Zusammensetzung anfällt,
    - bei dem eine erste Menge (46) des ersten Metallschrotts (42) des ersten Materials (40) und eine zweite Menge (56) des zweiten Metallschrotts (52) des zweiten Materials (50) einem Sammelbehälter (44, 82, 84, 86) zugeführt und in diesem gesammelt werden und
    - bei dem eine erste Mengeninformation ($m_1$) über ein Maß der ersten Menge (46) des ersten Metallschrotts (42) des ersten Materials (40) und eine zweite Mengeninformation ($m_2$) über ein Maß der zweiten Menge (56) des zweiten Metallschrotts (52) des zweiten Materials (50) bestimmt werden,
    **dadurch gekennzeichnet,**
    - **dass** eine Sammelbehälter-Zusammensetzungsinformation ($\{C_x\}$) über die Zusammensetzung des gesamten in dem Sammelbehälter (44, 82, 84, 86) gesammelten Metallschrotts abhängig von einer vorgegebenen ersten Zusammensetzungsinformation ($\{c_{x,1}\}$) über die erste Zusammensetzung des ersten Materials (40), einer vorgegebenen zweiten Zusammensetzungsinformation ($\{c_{x,2}\}$) über die zweite Zusammensetzung des zweiten Materials (50) und von der ersten ($m_1$) und der zweiten Mengeninformation ($m_2$) berechnet wird und
    - **dass** die Sammelbehälter-Zusammensetzungsinformation ($\{C_x\}$) mit einer vorgegebenen Zusammensetzungsvorgabe verglichen wird und die Zuführung von Metallschrott (42, 52, 92) in den Sammelbehälter (44, 82, 84, 86) unterbrochen wird, sobald der Vergleich ergibt, dass die Zusammensetzungsvorgabe nicht mehr erfüllt wird.

2.  Verfahren nach Anspruch 1,
    **dadurch gekennzeichnet, dass** die Sammelbehälter-Zusammensetzungsinformation ($\{C_x\}$) dem Sammelbehälter (44, 82, 84, 86) zugeordnet wird.

3.  Verfahren nach Anspruch 1 oder 2,
    **dadurch gekennzeichnet, dass** eine Sammelbehälter-Mengeninformation (M) über die Menge des gesamten in dem Sammelbehälter (44, 82, 84, 86) gesammelten Metallschrotts abhängig von der ersten ($m_1$) und der zweiten Mengeninformation ($m_2$) berechnet und dem Sammelbehälter (44, 82, 84, 86) zugeordnet wird.

4.  Verfahren nach einem der Ansprüche 1 bis 3,
    **dadurch gekennzeichnet, dass** als erste Mengeninformation ($m_1$) das Gewicht der ersten Menge (46) bestimmt wird und als zweite Mengeninformation ($m_2$) das Gewicht der zweiten Menge (56) bestimmt wird, wobei das Gewicht der ersten Menge (46) und das Gewicht der zweiten Menge (56) abhängig von vorgegebenen Produktionsparametern der Produktionsanlage (32, 72) bestimmt werden.

5.  Verfahren nach einem der Ansprüche 1 bis 4,
    **dadurch gekennzeichnet, dass** dem Sammelbehälter (44, 82, 84, 86) mehrfach nacheinander oder kontinuierlich Metallschrott (42, 52, 92) zugeführt wird und die Sammelbehälter-Zusammensetzungsinformation ($\{C_x\}$) mehrfach nacheinander oder kontinuierlich berechnet wird.

6.  Verfahren nach einem der Ansprüche 1 bis 5,
    **dadurch gekennzeichnet, dass** die Sammelbehälter-Zusammensetzungsinformation ($\{C_x\}$) mit einer vorgegebenen Zusammensetzungsvorgabe verglichen wird und dem Sammelbehälter (44, 82, 84, 86) abhängig vom Ergebnis des Vergleichs eine Information zugeordnet wird.

7.  Verfahren nach einem der Ansprüche 1 bis 6,
    **dadurch gekennzeichnet, dass** die Sammelbehälter-Zusammensetzungsinformation ($\{C_x\}$) mit einer aktuell vorgegebenen Zusammensetzungsvorgabe verglichen wird und, wenn der Vergleich ergibt, dass die aktuell vorgegebene Zusammensetzungsvorgabe nicht mehr erfüllt wird, aus einem Satz vorgegebener Zusammensetzungsvorgaben eine andere Zusammensetzungsvorgabe, die die Sammelbehälter-Zusammensetzungsinformation ($\{C_x\}$) erfüllt, ausgewählt wird und als neue aktuelle Zusammensetzungsvorgabe verwendet wird.

**8.** Verfahren nach einem der Ansprüche 1 bis 7,
**dadurch gekennzeichnet, dass** eine prognostizierte Sammelbehälter-Zusammensetzungsinformation ($\{C_x\}$) abhängig von der aktuellen Sammelbehälter-Zusammensetzungsinformation ($\{C_x\}$) und von einem vorgegebenen Produktionsplan (38) der Produktionsanlage (32, 72) berechnet wird.

**9.** Verfahren nach Anspruch 8,
**dadurch gekennzeichnet, dass** ein Unterbrechungs-Zeitpunkt zur Unterbrechung der Zuführung von Metallschrott (42, 52, 92) in den Sammelbehälter (44, 82, 84, 86) abhängig von der prognostizierten Sammelbehälter-Zusammensetzungsinformation ($\{C_x\}$) und einer Zusammensetzungsvorgabe bestimmt wird.

**10.** Verfahren nach Anspruch 9,
**dadurch gekennzeichnet, dass** zu einem Wiederaufnahme-Zeitpunkt nach dem Unterbrechungs-Zeitpunkt eine Wiederaufnahme der Zuführung von Metallschrott (42, 52, 92) in den Sammelbehälter (44, 82, 84, 86) erfolgt, wobei der Wiederaufnahme-Zeitpunkt abhängig von einem vorgegebenen Produktionsplan (38) der Produktionsanlage (32, 72) und der Zusammensetzungsvorgabe bestimmt wird.

**11.** Verfahren nach einem der Ansprüche 1 bis 10,
**dadurch gekennzeichnet, dass** die Zusammensetzungsvorgabe abhängig von einem vorgegebenen Produktionsplan (38) der Produktionsanlage (32, 72) vorgegeben wird.

**12.** Verfahren nach einem der Ansprüche 1 bis 11,
**dadurch gekennzeichnet, dass**, wenn die Sammelbehälter-Zusammensetzungsinformation ($\{C_x\}$) eine vorgegebene Zusammensetzungsvorgabe nicht erfüllt, ein weiterer Sammelbehälter (44, 82, 84, 86) aus einer Mehrzahl weiterer Sammelbehälter (44, 82, 84, 86) mit jeweils zugeordneter Sammelbehälter-Zusammensetzungsinformation ($\{C_x\}$) derart ausgewählt wird, dass die Gesamtmenge des in dem Sammelbehälter (44, 82, 84, 86) und in dem ausgewählten weiteren Sammelbehälter (44, 82, 84, 86) gesammelten Metallschrotts die vorgegebene Zusammensetzungsvorgabe erfüllt, und der in dem Sammelbehälter (44, 82, 84, 86) und in dem ausgewählten weiteren Sammelbehälter (44, 82, 84, 86) gesammelte Metallschrott miteinander kombiniert werden.

**13.** System für das Sammeln von Metallschrotten in Sammelbehältern (44, 82, 84, 86)

- mit einem Sammelbehältersystem (89), das dazu eingerichtet ist, nacheinander verschiedene Sammelbehälter (44, 82, 84, 86) an einer Produktionsschrott-Anfallstelle (36) einer Produktionsanlage (32, 72) derart zur Verfügung zu stellen, dass der an der Produktionsschrott-Anfallstelle (36) anfallende Metallschrott (42, 52, 92) in dem jeweiligen zur Verfügung gestellten Sammelbehälter (44, 82, 84, 86) gesammelt wird,
- wobei das System eine Bestimmungseinrichtung aufweist, die dazu eingerichtet ist, eine Mengeninformation ($m_1$, $m_2$) über ein Maß einer einem Sammelbehälter (44, 82, 84, 86) zugeführten Menge (46, 56) Metallschrott (42, 52, 92) eines in der Produktionsanlage (32, 72) verarbeiteten Materials (40, 50, 90) zu bestimmen,
**dadurch gekennzeichnet,**
- **dass** das System eine Berechnungseinrichtung aufweist, die dazu eingerichtet ist, beim Zuführen von Mengen (46, 56) Metallschrott (42, 52, 92) von verschiedenen in der Produktionsanlage (32, 72) verarbeiteten Materialien (40, 50, 90) mit vorgegebenen Zusammensetzungen in einen Sammelbehälter (44, 82, 84, 86) eine Sammelbehälter-Zusammensetzungsinformation ($\{C_x\}$) über die Zusammensetzung des gesamten in dem Sammelbehälter (44, 82, 84, 86) gesammelten Metallschrotts abhängig von den für die Mengen (46, 56) bestimmten Mengeninformationen ($m_1$, $m_2$) und von vorgegebenen Zusammensetzungsinformationen ($\{c_{x,i}\}$) über die vorgegebenen Zusammensetzungen zu berechnen, und
- **dass** das System eine Steuereinrichtung aufweist, die dazu eingerichtet ist, das Sammelbehältersystem (89) abhängig von der für einen Sammelbehälter (44, 82, 84, 86) berechneten Sammelbehälter-Zusammensetzungsinformation ($\{C_x\}$) zu steuern, wobei die Sammelbehälter-Zusammensetzungsinformation ($\{C_x\}$) mit einer vorgegebenen Zusammensetzungsvorgabe verglichen wird und die Zuführung von Metallschrott (42, 52, 92) in den Sammelbehälter (44, 82, 84, 86) unterbrochen wird, sobald der Vergleich ergibt, dass die Zusammensetzungsvorgabe nicht mehr erfüllt wird.

**Claims**

**1.** Method for collecting metal scrap (42, 52, 92), in particular aluminum scrap, in collecting containers (44, 82, 84, 86),

- in which, at one or more production scrap accrual points (36) of a production plant (32, 72), first metal scrap (42) of a first material (40) processed in the production plant (32, 72), the first material having a predetermined first composition, and second metal scrap (52) of a second material (50) processed in the production plant (32, 72), the second scrap having a predetermined second composition, accrues,

- in which a first quantity (46) of the first metal scrap (42) of the first material (40) and a second quantity (56) of the second metal scrap (52) of the second material (50) are fed to a collecting container (44, 82, 84, 86) and collected therein, and

- in which a first quantity information ($m_1$) on a measure of the first quantity (46) of the first metal scrap (42) of the first material (40) and a second quantity information ($m_2$) of a measure of the second quantity (56) of the second metal scrap (52) of the second material (50) are determined,

**characterised**

- **in that** a collecting container composition information ($\{C_x\}$) on the composition of the total metal scrap collected in the collecting container (44, 82, 84, 86) is calculated as a function of a predetermined first composition information ($\{c_{x,1}\}$) on the first composition of the first material (40), a predetermined second composition information ($\{c_{x,2}\}$) on the second composition of the second material (50) and of the first ($m_1$) and the second quantity information ($m_2$) and

- **in that** the collecting container composition information ($\{C_x\}$) is compared with a predetermined composition specification and the feeding of scrap metal (42, 52, 92) into the collecting container (44, 82, 84, 86) is interrupted as soon as the comparison shows that the composition specification is no longer fulfilled.

2. Method according to claim 1,
**characterised in that** the collecting container composition information ($\{C_x\}$) is assigned to the collecting container (44, 82, 84, 86).

3. Method according to claim 1 or 2,
**characterised in that** a collecting container quantity information (M) on the quantity of the total metal scrap collected in the collecting container (44, 82, 84, 86) is calculated as a function of the first ($m_1$) and the second quantity information ($m_2$) and is assigned to the collecting container (44, 82, 84, 86).

4. Method according to one of claims 1 to 3,
**characterised in that** the weight of the first quantity (46) is determined as the first quantity information ($m_1$) and the weight of the second quantity (56) is determined as the second quantity information ($m_2$), wherein the weight of the first quantity (46) and the weight of the second quantity (56) are determined as a function of predetermined production parameters of the production plant (32, 72).

5. Method according to one of claims 1 to 4,
**characterised in that** metal scrap (42, 52, 92) is fed to the collecting container (44, 82, 84, 86) several times in succession or continuously and the collecting container composition information ($\{C_x\}$) is calculated several times in succession or continuously.

6. Method according to one of claims 1 to 5,
**characterised in that** the collecting container composition information ($\{C_x\}$) is compared with a predetermined composition specification and a piece of information is assigned to the collecting container (44, 82, 84, 86) depending on the result of the comparison.

7. Method according to one of claims 1 to 6,
**characterised in that** the collecting container composition information ($\{C_x\}$) is compared with a current predetermined composition specification and, if the comparison shows that the current predetermined composition specification is no longer fulfilled, another composition specification, which is fulfilled by the collecting container composition information ($\{C_x\}$), is selected from a set of predetermined composition specifications and is used as the new current composition specification.

8. Method according to any one of claims 1 to 7,
**characterised in that** a predicted collecting container composition information ($\{C_x\}$) is calculated as a function of the current collecting container composition information ($\{C_x\}$) and a predetermined production plan (38) of the production plant (32, 72).

9. Method according to claim 8,

**characterised in that** an interruption time for interrupting the feeding of scrap metal (42, 52, 92) into the collecting container (44, 82, 84, 86) is determined as a function of the predicted collecting container composition information ($\{C_x\}$) and a composition specification.

10. Method according to claim 9,
    **characterised in that** the feeding of scrap metal (42, 52, 92) into the collecting container (44, 82, 84, 86) is resumed at a resumption time after the interruption time, the resumption time being determined as a function of a predetermined production plan (38) of the production plant (32, 72) and the composition specification.

11. Method according to one of claims 1 to 10,
    **characterised in that** the composition specification is predetermined as a function of a predetermined production plan (38) of the production plant (32, 72).

12. Method according to one of claims 1 to 11,
    **characterised in that**, if the collecting container composition information ($\{C_x\}$) does not fulfil a predetermined composition specification, a further collecting container (44, 82, 84, 86) is selected from a plurality of further collecting containers (44, 82, 84, 86), each of which has an assigned collecting container composition information ($\{C_x\}$), in such a way, that the total amount of scrap metal collected in the collecting container (44, 82, 84, 86) and in the selected further collecting container (44, 82, 84, 86) fulfils the predetermined composition specification, and the scrap metal collected in the collecting container (44, 82, 84, 86) and in the selected further collecting container (44, 82, 84, 86) are combined with one another.

13. System for collecting scrap metal in collecting containers (44, 82, 84, 86),

    - having a collecting container system (89) configured to provide, one after the other, different collecting containers (44, 82, 84, 86) at a production scrap accrual point (36) of a production plant (32, 72) in such a way that the metal scrap (42, 52, 92) accruing at the production scrap accrual point (36) is collected in the respectively provided collecting container (44, 82, 84, 86),
    - wherein the system comprises a determining device which is configured to determine a quantity information ($m_1$, $m_2$) on a measure of a quantity (46, 56) of scrap metal (42, 52, 92) of a material (40, 50, 90) processed in the production plant (32, 72) fed into a collecting container (44, 82, 84, 86),
    **characterised**
    - **in that** the system comprises a calculation device configured to calculate, when quantities (46, 56) of scrap metal (42, 52, 92) of different materials (40, 50, 90) processed in the production plant (32, 72), the materials having predetermined compositions, are fed into a collecting container (44, 82, 84, 86), a collecting container composition information ($\{C_x\}$) on the composition of the total scrap metal collected in the collecting container (44, 82, 84, 86) as a function of the quantity information ($m_1$, $m_2$) determined for the quantities (46, 56) and predetermined composition information ($\{c_{x,i}\}$) on the predetermined compositions, and
    - **in that** the system has a control device which is configured to control the collecting container system (89) as a function of the collecting container composition information ($\{C_x\}$) calculated for a collecting container (44, 82, 84, 86), wherein the collecting container composition information ($\{C_x\}$) is compared with a predetermined composition specification and the feeding of scrap metal (42, 52, 92) into the collecting container (44, 82, 84, 86) is interrupted as soon as the comparison shows that the composition specification is no longer fulfilled.

## Revendications

1. Procédé de collecte de déchets métalliques (42, 52, 92), en particulier de déchets d'aluminium, dans des récipients de collecte (44, 82, 84, 86),

    - dans lequel occurrent, en un ou plusieurs points d'occurrence de déchets de production (36) d'une installation de production (32, 72), des premiers déchets métalliques (42) d'un premier matériau (40) traités dans l'installation de production (32, 72) et ayant une première composition prédéterminée et des seconds déchets métalliques (52) d'un second matériau (50) traités dans l'installation de production (32, 72) et ayant une seconde composition prédéterminée,
    - dans lequel une première quantité (46) des premiers déchets métalliques (42) du premier matériau (40) et une deuxième quantité (56) des deuxièmes déchets métalliques (52) du deuxième matériau (50) sont amenées à un récipient de collecte (44, 82, 84, 86) et sont collectées dans celui-ci et

- dans lequel une première information de quantité ($m_1$) est déterminée par une mesure de la première quantité (46) des premiers déchets métalliques (42) du premier matériau (40) et une deuxième information de quantité ($m_2$) est déterminée par une mesure de la deuxième quantité (56) des deuxièmes déchets métalliques (52) du deuxième matériau (50),

**caractérisé**

- **en ce qu'**une information de composition de récipient de collecte ($\{C_x\}$) concernant la composition de la totalité des déchets métalliques collectés dans le récipient de collecte (44, 82, 84, 86) est calculée en fonction d'une première information de composition prédéterminée ($\{c_{x,1}\}$) concernant la première composition du premier matériau (40), d'une deuxième information de composition prédéterminée ($\{c_{x,2}\}$) concernant la deuxième composition du deuxième matériau (50) et de la première ($m_1$) et de la deuxième information de quantité ($m_2$), et

- **en ce que** l'information de composition de récipient de collecte ($\{C_x\}$) est comparée à une consigne de composition prédéfinie et l'amenée de déchets métalliques (42, 52, 92) dans le récipient de collecte (44, 82, 84, 86) est interrompue dès que la comparaison résulte en ce que la consigne de composition n'est plus remplie.

2. Procédé selon la revendication 1,
**caractérisé en ce que** l'information de composition de récipient de collecte ($\{C_x\}$) est associée au récipient de collecte (44, 82, 84, 86).

3. Procédé selon la revendication 1 ou 2,
**caractérisé en ce qu'**une information de quantité de récipient de collecte (M) concernant la quantité de l'ensemble des déchets métalliques collectés dans le récipient de collecte (44, 82, 84, 86) est calculée en fonction de la première ($m_1$) et de la deuxième information de quantité ($m_2$) et est associée au récipient de collecte (44, 82, 84, 86).

4. Procédé selon l'une des revendications 1 à 3,
**caractérisé en ce que** le poids de la première quantité (46) est déterminé comme première information de quantité ($m_1$) et le poids de la deuxième quantité (56) est déterminé comme deuxième information de quantité ($m_2$), le poids de la première quantité (46) et le poids de la deuxième quantité (56) étant déterminés en fonction de paramètres de production prédéfinis de l'installation de production (32, 72).

5. Procédé selon l'une quelconque des revendications 1 à 4,
**caractérisé en ce que** le récipient de collecte (44, 82, 84, 86) est alimenté plusieurs fois successivement ou en continu en déchets métalliques (42, 52, 92) et l'information de composition de récipient de collecte ($\{C_x\}$) est calculée plusieurs fois successivement ou en continu.

6. Procédé selon l'une des revendications 1 à 5,
**caractérisé en ce que** l'information de composition de récipient de collecte ($\{C_x\}$) est comparée à une consigne de composition prédéterminée et une information est associée au récipient de collecte (44, 82, 84, 86) en fonction du résultat de la comparaison.

7. Procédé selon l'une quelconque des revendications 1 à 6,
**caractérisé en ce que** l'information de composition de récipient de collecte ($\{C_x\}$) est comparée à une consigne de composition prédéterminée actuelle et, si la comparaison résulte **en ce que** la consigne de composition prédéterminée actuelle n'est plus satisfaite, une autre consigne de composition qui satisfait à l'information de composition de récipient de collecte ($\{C_x\}$) est sélectionnée à partir d'un ensemble de consignes de composition prédéterminées et est utilisée comme nouvelle consigne de composition actuelle.

8. Procédé selon l'une quelconque des revendications 1 à 7,
**caractérisé en ce qu'**une information de composition de récipient de collecte prédite ($\{C_x\}$) est calculée en fonction de l'information de composition de récipient de collecte actuelle ($\{C_x\}$) et d'un plan de production prédéterminé (38) de l'installation de production (32, 72).

9. Procédé selon la revendication 8,
**caractérisé en ce qu'**un moment d'interruption pour interrompre l'alimentation en déchets métalliques (42, 52, 92) dans le récipient de collecte (44, 82, 84, 86) est déterminé en fonction de l'information de composition de récipient de collecte prédite ($\{C_x\}$) et d'une consigne de composition.

10. Procédé selon la revendication 9,

**caractérisé en ce qu'**à un moment de reprise après le moment d'interruption, une reprise de l'alimentation en déchets métalliques (42, 52, 92) dans le récipient de collecte (44, 82, 84, 86) est effectuée, le moment de reprise étant déterminé en fonction d'un plan de production (38) prédéfini de l'installation de production (32, 72) et de la consigne de composition.

11. Procédé selon l'une des revendications 1 à 10,
    **caractérisé en ce que** la consigne de composition est donnée en fonction d'un plan de production (38) prédéterminé de l'installation de production (32, 72).

12. Procédé selon l'une quelconque des revendications 1 à 11,
    **caractérisé en ce que**, lorsque l'information de composition de récipient de collecte ($\{C_x\}$) ne satisfait pas à une consigne de composition prédéterminée, un récipient de collecte additionnel (44, 82, 84, 86) est sélectionné parmi une pluralité de récipients de collecte additionnels (44, 82, 84, 86) ayant chacun une information de composition de récipient de collecte associée ($\{C_x\}$) de telle sorte que la quantité totale de déchets métalliques collectés dans le récipient de collecte (44, 82, 84, 86) et dans le récipient de collecte additionnel sélectionné (44, 82, 84, 86) satisfait à la consigne de composition prédéterminée, et les déchets métalliques collectés dans le récipient de collecte (44, 82, 84, 86) et dans le récipient de collecte additionnel sélectionné (44, 82, 84, 86) sont combinés entre eux.

13. Système de collecte des déchets métalliques dans des récipients de collecte (44, 82, 84, 86)

    - avec un système de récipients de collecte (89), qui est configuré pour mettre à disposition successivement différents récipients de collecte (44, 82, 84, 86) à un point d'occurrence de déchets de production (36) d'une installation de production (32, 72) de telle sorte que les déchets métalliques (42, 52, 92) occurrant au point d'occurrence de déchets de production (36) sont collectés dans le récipient de collecte (44, 82, 84, 86) respectif mis à disposition,
    - le système comprenant un dispositif de détermination qui est configuré pour déterminer une information de quantité ($m_1$, $m_2$) concernant une mesure d'une quantité (46, 56) de déchets métalliques (42, 52, 92) d'un matériau (40, 50, 90) traité dans l'installation de production (32, 72), amenée à un récipient de collecte (44, 82, 84, 86),
    **caractérisé**
    - **en ce que** le système comprend un dispositif de calcul qui est configuré pour, lors de l'amenée de quantités (46, 56) de déchets métalliques (42, 52, 92) de différents matériaux (40, 50, 90) traités dans l'installation de production (32, 72) avec des compositions prédéterminées dans un récipient de collecte (44, 82, 84, 86), calculer une information de composition de récipient de collecte ($\{C_x\}$) concernant la composition de la totalité des déchets métalliques collectés dans le récipient de collecte (44, 82, 84, 86) en fonction de l'information de quantité ($m_1$, $m_2$) déterminée pour les quantités (46, 56) et d'informations de composition prédéterminées ($\{c_{x,i}\}$) concernant les compositions prédéterminées, et
    - **en ce que** le système comprend un dispositif de commande qui est configuré pour commander le système de récipient de collecte (89) en fonction de l'information de composition de récipient de collecte ($\{C_x\}$) calculée pour un récipient de collecte (44, 82, 84, 86), l'information de composition de récipient de collecte ($\{C_x\}$) étant comparée à une consigne de composition prédéterminée et l'amenée de déchets métalliques (42, 52, 92) dans le récipient de collecte (44, 82, 84, 86) étant interrompue dès que la comparaison résulte en ce que la consigne de composition n'est plus remplie.

Fig.1

Fig.2

Fig.3

Fig.4

EP 3 744 863 B1

**Fig.5a**

| | Si | Fe | Cu |
|---|---|---|---|
| $\{C_x(t_1)\}$ | 0,2% | 0,4% | 0,2% |
| $\{C_x(t_2)\}$ | 0,3% | 0,3% | 0,4% |

100

| | Si max | Fe max | Cu max |
|---|---|---|---|
| Schrott-klasse 3 | 0,4% | 0,5% | 0,6% |

102

(✓) (✓) (✓) → ✓

| Schrott-klassen | Si max | Fe max | Cu max |
|---|---|---|---|
| 1 | 0,3% | 0,7% | 0,3% |
| 2 | 0,6% | 0,2% | 0,7% |
| 3 | 0,4% | 0,5% | 0,6% |

104

**Fig.5b**

| | Si | Fe | Cu |
|---|---|---|---|
| $\{C_x(t_1)\}$ | 0,2% | 0,4% | 0,2% |
| $\{C_x(t_2)\}$ | 0,3% | 0,6% | 0,3% |

100

| | Si max | Fe max | Cu max |
|---|---|---|---|
| Schrott-klasse 3 | 0,4% | 0,5% | 0,6% |

102

(✓) (✗) (✓) → ✗

| Schrott-klassen | Si max | Fe max | Cu max |
|---|---|---|---|
| 1 | 0,3% | 0,7% | 0,3% |
| 2 | 0,6% | 0,2% | 0,7% |
| 3 | 0,4% | 0,5% | 0,6% |

104

106

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017108908 A9

- DE 102012024816 A1

**In der Beschreibung aufgeführte Nicht-Patentliteratur**

- **V. M. KEVORKIJAN**. Modeling of Alternative Compositions of Recycled Wrought Aluminum Alloys. *JOM*, 2013, vol. 65, 973-981